# EUROPEAN PATENT APPLICATION

(11) **EP 2 762 759 A1**
(43) Date of publication of application: **06.08.2014**
(21) Application number: 12834772.1
(22) Date of filing: 20.09.2012
(51) Int. Cl.: F16L 19/08

(54) **FLARELESS TUBE CONNECTION STRUCTURE**

(30) Priority: 30.09.2011 JP 2011218371
(71) Applicant: Daikin Industries, Ltd., Osaka-shi, Osaka 530-8323 (JP)
(72) Inventor: SHIMAMURA, Takashi, Osaka-shi, Osaka 530-8323 (JP); NAKATA, Haruo, Osaka-shi, Osaka 530-8323 (JP)
(74) Representative: HOFFMANN EITLE
(86) International application number: PCT/JP2012/073993
(87) International publication number: WO 2013/047302

(57) **Abstract**

A flareless tube connection structure (1) has a joint body (2), a coupling member (3) that is mounted to the joint body by being threaded thereto, and a front ferrule (4) and a back ferrule (5) that are formed separately from the joint body (2) and the coupling member (3) and clamped between the joint body (2) and the coupling member (3). The front ferrule (4) and the back ferrule (5) are formed separately from each other and can be provisionally assembled together before the coupling member (3) is mounted to the joint body (2).

## Description

### TECHNICAL FIELD

The present invention relates to a flareless tube connection structure, and particularly to a flareless tube connection structure that uses two ferrules.

### BACKGROUND ART

In the past, piping systems of refrigeration apparatuses have used flareless tube joints having a joint body, a coupling member mounted to the joint body by being threaded thereto, and ferrules that are formed separately from the joint body and the coupling member and are clamped between the joint body and the coupling member.

Such flareless tube joints that use ferrules include those having a single ferrule structure that uses one ferrule, and those having a double ferrule structure that uses two ferrules (a front ferrule and a back ferrule). An example of a flareless tube joint having a single ferrule structure is disclosed in Patent Literature 1 (Utility Model Application Laid-open Publication No. 49-3111). Examples of flareless tube joints having double ferrule structures are disclosed in Patent Literature 2 (U.S. Patent Application Laid-open Publication No. 2004/0113429, Specification), Patent Literature 3 (Japanese Laid-open Patent Application No. 2003-232474), Patent Literature 4 (U.S. Patent No. 4304422, Specification), Patent Literature 5 (U.S. Patent No. 4944534, Specification), and Patent Literature 6 (Japanese Laid-open Patent Application No. 2007-235989).

A flareless tube joint having a double ferrule structure has higher pipe support force and higher reliability as a tube connection structure in comparison with a flareless tube joint having a single ferrule structure, because the front ferrule and the back ferrule are reliably wedged into a pipe.

### SUMMARY OF THE INVENTION

However, in a flareless tube joint having a double ferrule structure, axial displacement sometimes occurs between the two ferrules because the front ferrule is pressed into the joint body via the back ferrule which is formed separately from the front ferrule. When such axial displacement occurs, the front ferrule is pressed into the joint body by an uneven force in the circumferential direction, and there is a risk that there will be a portion where the ferrule is not sufficiently wedged into the pipe and fluid in the pipe will leak out of this portion. In the flareless tube joints having a double ferrule structure in Patent Literatures 2 and 3, the front ferrule and the back ferrule are individual components before the coupling member is mounted to the joint body. Therefore, axial displacement between the two ferrules occurs readily as described above. In the flareless tube joints having a double ferrule structure in Patent Literatures 4 to 6, the front ferrule and the back ferrule are molded integrally, and the front ferrule and the back ferrule are separated while the coupling member is being mounted to the joint body. Specifically, after the front ferrule and the back ferrule have been separated, axial displacement occurs readily between the two ferrules because they are two individual components, similar to the double ferrule structures in Patent Literatures 2 and 3.

An object of the present invention is to provide a flareless tube connection structure using two ferrules, wherein axial displacement between a front ferrule and a back ferrule is suppressed.

A flareless tube connection structure according to a first aspect comprises a joint body, a coupling member mounted to the joint body by being threaded thereto, and a front ferrule and back ferrule formed separately from the joint body and the coupling member and clamped between the joint body and the coupling member. The front ferrule and the back ferrule are formed separately from each other and can be provisionally assembled together before the coupling member is mounted to the joint body.

In this flareless tube connection structure, the front ferrule and the back ferrule, which are formed separately from each other, are clamped between the joint body and the coupling member while provisionally assembled together.

It is thereby possible in this flareless tube connection structure to suppress axial displacement between the front ferrule and the back ferrule, and it is therefore possible to ensure that the ferrules will be sufficiently wedged into a pipe and the fluid flowing through the pipe will not leak out readily.

A flareless tube connection structure according to a second aspect is the flareless tube connection structure according to the first aspect, wherein a first back ferrule-side provisional-assembly engaging part is formed on the back ferrule. A front ferrule-side provisional-assembly engaging part capable of engaging with the first back ferrule-side provisional-assembly engaging part is formed on the front ferrule. The front ferrule and the back ferrule are provisionally assembled so that mutual axial and diametric movement is restricted by the engaging between the first back ferrule-side provisional-assembly engaging part and the front ferrule-side provisional-assembly engaging part.

In this flareless tube connection structure, the front ferrule and the back ferrule can be provisionally assembled in a state in which their mutual axial and diametric movement is restricted by the engaging between the first back ferrule-side provisional-assembly engaging part and the front ferrule-side provisional-assembly engaging part.

A flareless tube connection structure according to a third aspect is the flareless tube connection structure according to the second aspect, wherein a pipe through-hole into which a pipe is inserted is formed in the back ferrule. Before the front ferrule and the back ferrule are provisionally assembled, the maximum angle at which the back ferrule can be inclined relative to the axial center, due to a gap between the hole diameter of the pipe through-hole and the outside diameter of the pipe, is denoted as the pre-provisional-assembly inclinable angle θ0. After the front ferrule and the back ferrule have been provisionally assembled, the maximum angle at which the back ferrule can be inclined relative to the axial center, due to the engaging between the first back ferrule-side provisional-assembly engaging part and the front ferrule-side provisional-assembly engaging part, is denoted as the post-provisional-assembly inclinable angle θ1. In this case, the front ferrule and the back ferrule are configured so as to fulfill the relationship θ1 < θ0.

A flareless tube connection structure according to a fourth aspect is the flareless tube connection structure according to the second or third aspect, wherein a pipe through-hole into which a pipe is inserted is formed in the back ferrule. The axial length of the back ferrule is denoted as Lb. The gap between the hole diameter of the pipe through-hole and the outside diameter of the pipe is denoted as Sb. After the front ferrule and the back ferrule have been provisionally assembled, the displacement whereby the back ferrule can move in the axial direction relative to the front ferrule, due to the engaging between the first back ferrule-side provisional-assembly engaging part and the front ferrule-side provisional-assembly engaging part, is denoted as L1. The maximum outside diameter of the first back ferrule-side provisional-assembly engaging part is denoted as Dm. In this case, the front ferrule and the back ferrule are configured so as to fulfill the relationship L1 < Sb × Dm / Lb.

A pipe through-hole into which a pipe is inserted is formed in the back ferrule, and there is a gap between the pipe through-hole and the pipe inserted into the pipe through-hole. Specifically, when the pipe has been inserted into the pipe through-hole, there is a possibility of the back ferrule being inclined according to the gap between the pipe through-hole and the pipe. The back ferrule incline that can result from this gap also affects the axial displacement between the front ferrule and the back ferrule.

In view of this, in this flareless tube connection structure, the front ferrule and the back ferrule are provisionally assembled so as to fulfill the relationship θ1 < θ0 and/or the relationship L1 < Sb × Dm / Lb. There is a limit on the back ferrule incline that can result from the gap between the hole diameter of the pipe through-hole and the outside diameter of the pipe.

It is thereby possible in this flareless tube connection structure to suppress the axial displacement between the front ferrule and the back ferrule even further.

A flareless tube connection structure according to a fifth aspect is the flareless tube connection structure according to any of the second through fourth aspects, wherein the first back ferrule-side provisional-assembly engaging part is a first back ferrule-side provisional-assembly protruding part that protrudes diametrically outward. The front ferrule-side provisional-assembly engaging part has a front ferrule-side provisional-assembly protruding part protruding diametrically inward, and a front ferrule-side provisional-assembly enlarged-diameter part having a larger inside diameter than the front ferrule-side provisional-assembly protruding part. The outside diameter of the first back ferrule-side provisional-assembly protruding part is formed so as to be larger than the inside diameter of the front ferrule-side provisional-assembly protruding part and smaller than the inside diameter of the front ferrule-side provisional-assembly enlarged-diameter part. The first back ferrule-side provisional-assembly protruding part is inserted through and held in the front ferrule-side provisional-assembly enlarged-diameter part via the front ferrule-side provisional-assembly protruding part.

In this flareless tube connection structure, the front ferrule and the back ferrule are engaged and provisionally assembled in a state of overlap in the axial direction.

It is thereby possible in this flareless tube connection structure to impede undoing of the provisionally assembled state between the front ferrule and the back ferrule.

A flareless tube connection structure according to a sixth aspect is the flareless tube connection structure according to the fifth aspect, wherein the first back ferrule-side provisional-assembly protruding part is press-fitted into the front ferrule-side provisional-assembly protruding part and inserted through the front ferrule-side provisional-assembly enlarged-diameter part.

In this flareless tube connection structure, the front ferrule and the back ferrule can be provisionally assembled by being pressed together.

A flareless tube connection structure according to a seventh aspect is the flareless tube connection structure according to any of the first through sixth aspects, wherein the coupling member and the back ferrule are capable of being provisionally assembled together before the coupling member is mounted to the joint body.

In this flareless tube connection structure, the front ferrule, the back ferrule, and the coupling member can be coupled with the joint body in a state of being provisionally assembled together.

It is thereby possible in this flareless tube connection structure to improve workability when the coupling member is mounted to the joint body.

A flareless tube connection structure according to an eighth aspect is the flareless tube connection structure according to the seventh aspect, wherein a second back ferrule-side provisional-assembly engaging part is formed in the back ferrule. A coupling member-side provisional-assembly engaging part capable of engaging with the second back ferrule-side provisional-assembly engaging part is formed in the coupling member. The coupling member and the back ferrule are provisionally assembled so that mutual axial and diametric movement are restricted, due to the engaging between the second back ferrule-side provisional-assembly engaging part and the coupling member-side provisional-assembly engaging part.

In this flareless tube connection structure, the coupling member and the back ferrule can be provisionally assembled so that mutual axial and diametric movement are restricted, due to the engaging between the second back ferrule-side provisional-assembly engaging part and the coupling member-side provisional-assembly engaging part.

It is thereby possible in this flareless tube connection structure to provisionally assemble the front ferrule, the back ferrule, and the coupling member so that mutual axial and diametric movement are restricted, due to the engaging between the front ferrule, the back ferrule, and the coupling member.

A flareless tube connection structure according to a ninth aspect is the flareless tube connection structure according to the eighth aspect, wherein the second back ferrule-side provisional-assembly engaging part is a second back ferrule-side provisional-assembly protruding part that protrudes diametrically outward. The coupling member-side provisional-assembly engaging part has a coupling member-side provisional-assembly protruding part that protrudes diametrically inward and a coupling member-side provisional-assembly enlarged-diameter part having a larger inside diameter than the coupling member-side provisional-assembly protruding part. The outside diameter of the second back ferrule-side provisional-assembly protruding part is formed so as to be larger than the inside diameter of the coupling member-side provisional-assembly protruding part and smaller than the inside diameter of the coupling member-side provisional-assembly enlarged-diameter part. The second back ferrule-side provisional-assembly protruding part is inserted through and held in the coupling member-side provisional-assembly enlarged-diameter part via the coupling member-side provisional-assembly protruding part.

In this flareless tube connection structure, the coupling member and the back ferrule are engaged and provisionally assembled in a state of overlap in the axial direction.

It is thereby possible in this flareless tube connection structure to impede undoing of the provisionally assembled state of the coupling member and the back ferrule, and to impede undoing of the provisionally assembled state of the front ferrule, the back ferrule, and the coupling member.

A flareless tube connection structure according to a tenth aspect is the flareless tube connection structure according to the ninth aspect, wherein the second back ferrule-side provisional-assembly protruding part is press-fitted into the coupling member-side provisional-assembly protruding part and inserted through the coupling member-side provisional-assembly enlarged-diameter part.

In this flareless tube connection structure, the back ferrule and the coupling member can be provisionally assembled by being pressed together.

It is thereby possible in this flareless tube connection structure to provisionally assemble the front ferrule, the back ferrule, and the coupling member by clamping the back ferrule between the front ferrule and the coupling member and then pressing the front ferrule and the coupling member together in the axial direction.

A flareless tube connection structure according to an eleventh aspect is the flareless tube connection structure according to the tenth aspect, wherein the cross-sectional shape of the second back ferrule-side provisional-assembly protruding part along the axial direction is an arcuate shape.

Because the back ferrule is pressed diametrically inward when the coupling member is mounted to the joint body, the second back ferrule-side provisional-assembly protruding part deforms in the back ferrule provisionally assembled with the coupling member and the deformation is uneven in the circumferential direction, and there is therefore a risk of fluid leakage.

In view of this, in this flareless tube connection structure, deformation of the second back ferrule-side provisional-assembly protruding part is impeded and uneven deformation in the circumferential direction is prevented by fashioning the cross-sectional shape of the second back ferrule-side provisional-assembly protruding part along the axial direction into an arcuate shape.

A flareless tube connection structure according to a twelfth aspect is the flareless tube connection structure according to the tenth or eleventh aspect, wherein the difference between the outside diameter of the first back ferrule-side provisional-assembly protruding part and the inside diameter of the front ferrule-side provisional-assembly protruding part is denoted as the ferrule-ferrule press-fitting margin Sff. The difference between the outside diameter of the second back ferrule-side provisional-assembly protruding part and the inside diameter of the coupling member-side provisional-assembly protruding part is denoted as the ferrule-coupling member press-fitting margin Sfc. In this case, the front ferrule, the back ferrule, and the coupling member are configured so as to fulfill the relationship Sff < Sfc.

In this flareless tube connection structure, when the back ferrule is clamped between the front ferrule and the coupling member and the front ferrule and the coupling member are pressed together, the front ferrule and the back ferrule are provisionally assembled first, having the smaller press-fitting margin. The back ferrule and the coupling member, having the larger press-fitting margin, are then provisionally assembled.

It is thereby possible in this flareless tube connection structure to smoothly provisionally assemble the front ferrule, the back ferrule, and the coupling member.

A flareless tube connection structure according to a thirteenth aspect is the flareless tube connection structure according to any of the tenth through twelfth aspects, wherein the strength of the front ferrule-side provisional-assembly protruding part is denoted as the front ferrule-side provisional-assembly protruding part strength Ff. The strength of the coupling member-side provisional-assembly protruding part is denoted as the coupling member-side provisional-assembly protruding part strength Fc. In this case, the front ferrule and the coupling member are configured so as to fulfill the relationship Ff < Fc.

In this flareless tube connection structure, when the back ferrule is clamped between the front ferrule and the coupling member and the front ferrule and the coupling member are pressed together, the front ferrule and the back ferrule, having the lesser protruding part strength, are provisionally assembled first. The back ferrule and the coupling member, having the greater protruding part strength, are then provisionally assembled.

It is thereby possible in this flareless tube connection structure to smoothly provisionally assemble the front ferrule, the back ferrule, and the coupling member.

### BRIEF DESCRIPTION OF THE DRAWINGS

FIG. 1 is a cross-sectional view showing the state of the flareless tube connection structure according to an embodiment of the present invention when the structure begins to be connected to a pipe;
FIG. 2 is a cross-sectional view showing the front ferrule and the back ferrule as being provisionally assembled together;
FIG. 3 is a cross-sectional view showing an enlargement of section A in FIG. 2;
FIG. 4 is a cross-sectional view showing the joint body;
FIG. 5 is a cross-sectional view showing an enlargement of section B in FIG. 4;
FIG. 6 is a cross-sectional view showing the coupling member;
FIG 7 is a cross-sectional view showing the front ferrule;
FIG. 8 is a cross-sectional view showing the back ferrule;
FIG. 9 illustrates the range in which the back ferrule can be inclined when the front ferrule and the back ferrule are not provisionally assembled together;
FIG. 10 illustrates the range in which the back ferrule can be inclined when the front ferrule and the back ferrule are provisionally assembled together;
FIG. 11 is a cross-sectional view showing the flareless tube connection structure when connection to the pipe is complete;
FIG. 12 is a cross-sectional view showing the provisionally assembled state of the front ferrule and the back ferrule in Modification 1;
FIG. 13 is a cross-sectional view showing the front ferrule in Modification 1;
FIG. 14 is a cross-sectional view showing the back ferrule in Modification 1;
FIG. 15 is a cross-sectional view showing the provisionally assembled state of the front ferrule and the back ferrule in Modification 2;
FIG. 16 is a cross-sectional view showing the front ferrule in Modification 2;
FIG. 17 is a cross-sectional view showing the back ferrule in Modification 2;
FIG. 18 is a cross-sectional view showing the state of the flareless tube connection structure according to Modification 3 when the structure begins to be connected to a pipe;
FIG. 19 is a cross-sectional view showing the front ferrule and the back ferrule in Modification 3 as being provisionally assembled together;
FIG. 20 is a cross-sectional view showing the provisionally assembled state of the back ferrule and the coupling member in Modification 3;
FIG. 21 is a cross-sectional view showing an enlargement of section C in FIG. 20;
FIG. 22 is a cross-sectional view showing the coupling member in Modification 3;
FIG. 23 is a cross-sectional view showing the back ferrule in Modification 3;
FIG. 24 is a cross-sectional view showing the state of the flareless tube connection structure in Modification 3 when connection to the pipe is complete;
FIG. 25 is a cross-sectional view showing the back ferrule in Modification 4;
FIG. 26 is a cross-sectional view showing the state immediately before the back ferrule and the coupling member in Modification 4 are provisionally assembled (before deformation);
FIG. 27 is a cross-sectional view showing the provisionally assembled state of the back ferrule and the coupling member in Modification 4 (after deformation);
FIG. 28 is a cross-sectional view showing the provisionally assembled state of the back ferrule and the coupling member in Modification 5;
FIG. 29 is a cross-sectional view showing the coupling member in Modification 5;
FIG. 30 is a cross-sectional view showing the back ferrule in Modification 5;
FIG. 31 is a cross-sectional view showing the provisionally assembled state of the back ferrule and the coupling member in Modification 6;
FIG. 32 is a cross-sectional view showing the coupling member in Modification 6;
FIG. 33 is a cross-sectional view showing the back ferrule in Modification 6;
FIG. 34 is a cross-sectional view showing the state of the flareless tube connection structure in Modification 7 when connection to the pipe is complete;
FIG. 35 is a cross-sectional view showing the state of the flareless tube connection structure in Modification 8 when the structure begins to be connected to a pipe;
FIG. 36 is a cross-sectional view showing the joint body in Modification 8;
FIG. 37 is a cross-sectional view showing the coupling member in Modification 8;
FIG. 38 is a rear surface view showing the coupling member in Modification 8;
FIG. 39 is a cross-sectional view showing the state of the flareless tube connection structure in Modification 8 when connection to the pipe is complete;
FIG. 40 is a perspective view showing the main part of a specialized tool of the flareless tube connection structure in Modification 8;
FIG. 41 is a cross-sectional view showing the state of the flareless tube connection structure in Modification 9 when the structure begins to be connected to a pipe;
FIG. 42 is a cross-sectional view showing the state of the flareless tube connection structure in Modification 9 when connection to the pipe is complete (the state immediately before cutting away); and
FIG. 43 is a cross-sectional view showing the state of the flareless tube connection structure in Modification 9 when connection to the pipe is complete (the state after cutting away).

### DESCRIPTION OF EMBODIMENTS

Embodiments of the flareless tube connection structure according to the present invention are described below based on the drawings.

### <Configuration>

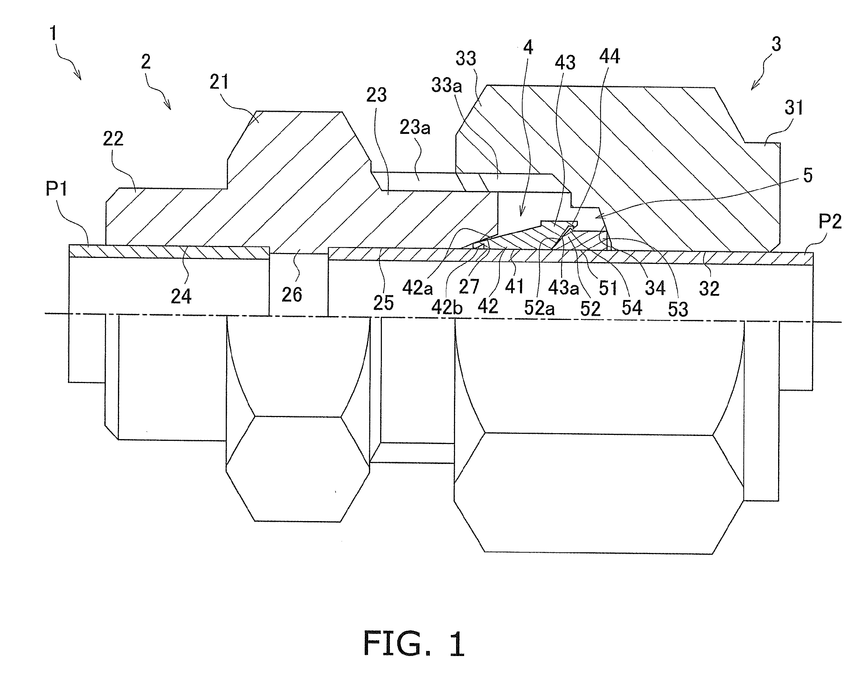

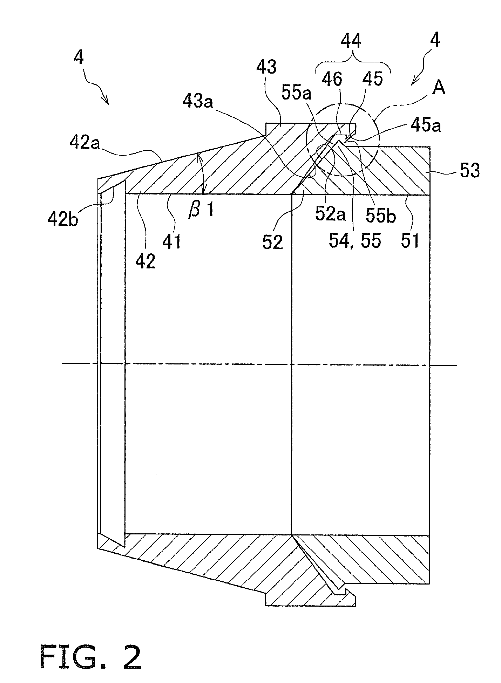

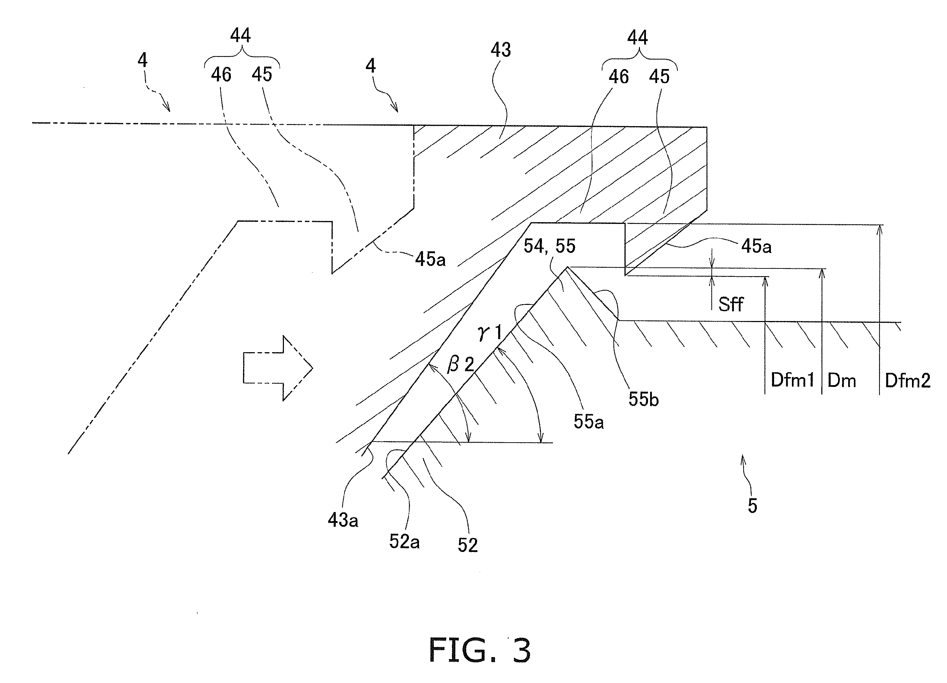

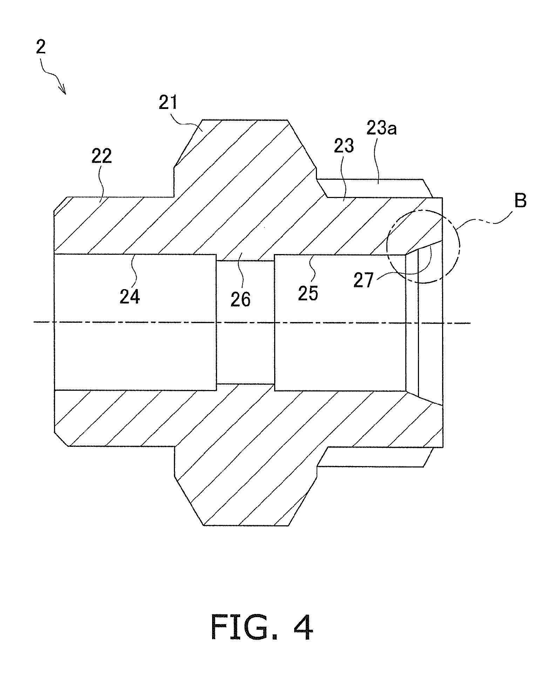

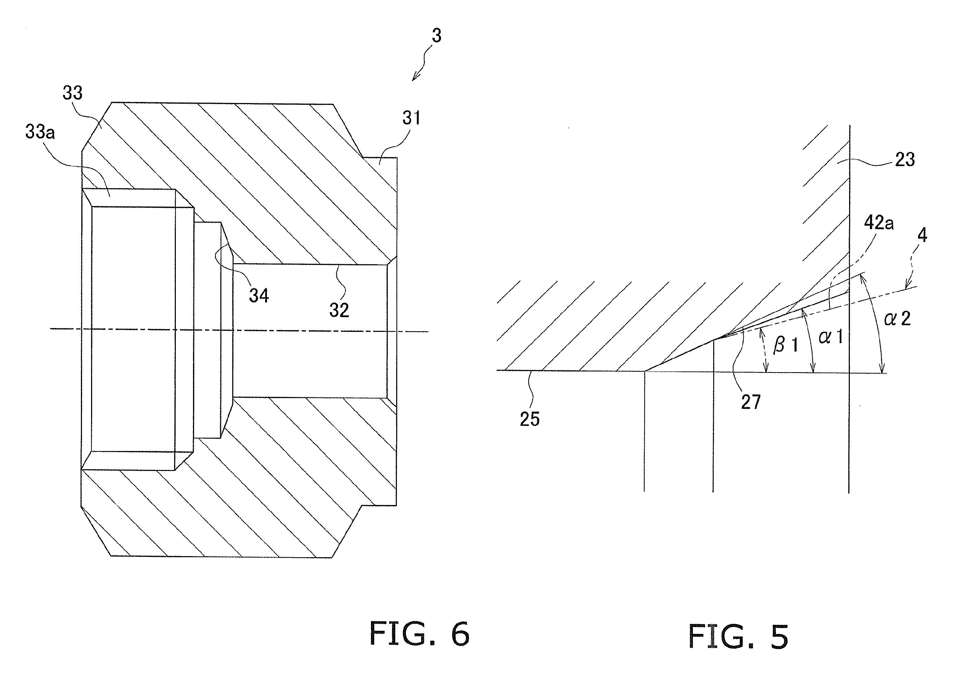

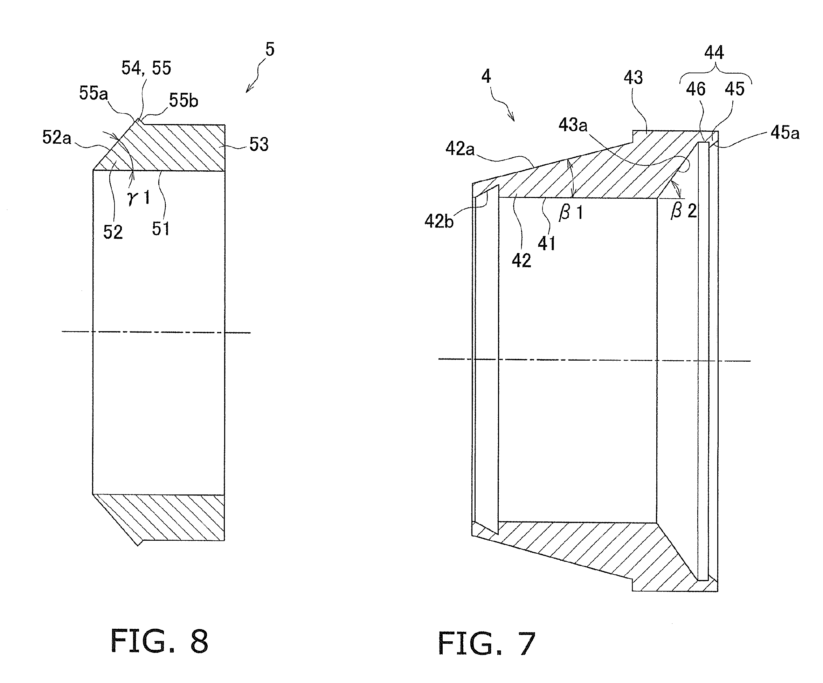

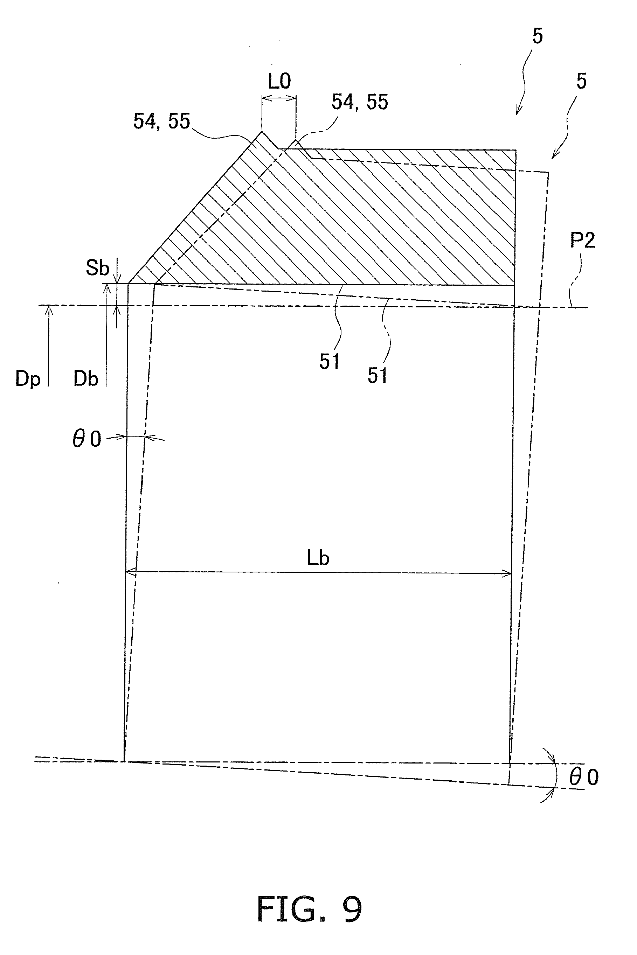

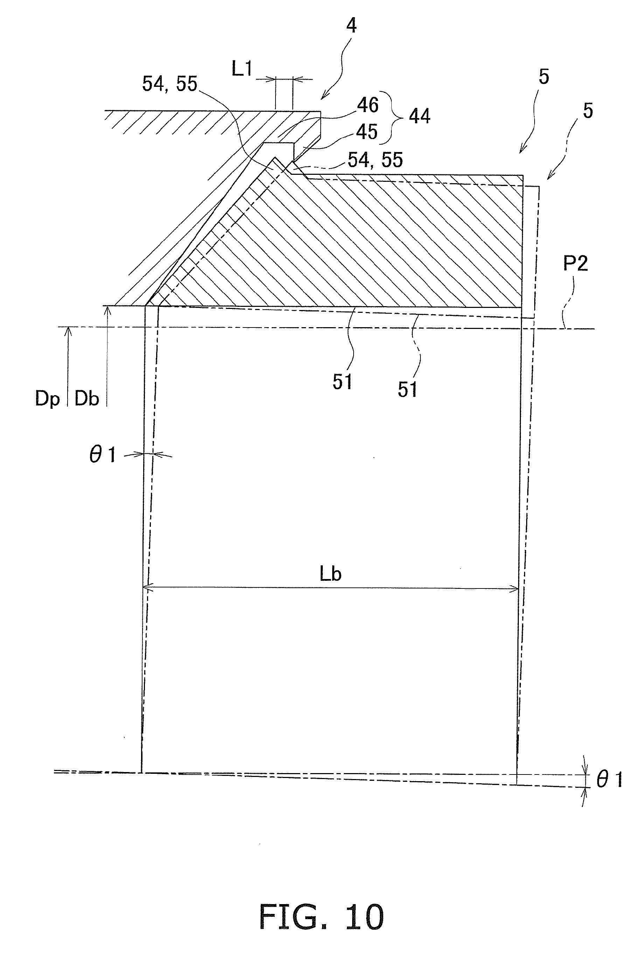

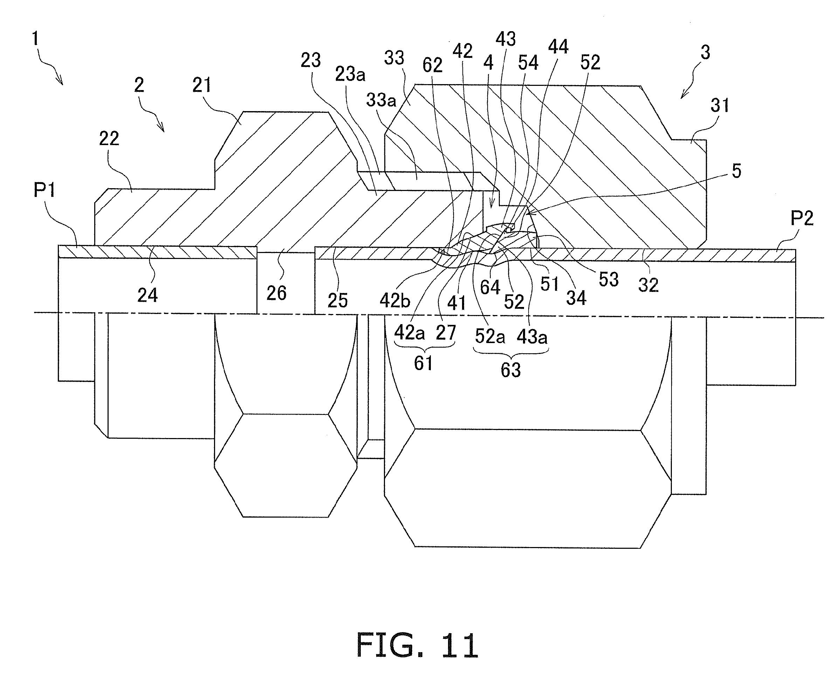

The flareless tube connection structure 1 of the present embodiment is applied to a tube joint part in a tube joint for connecting pipes together, or to a tube joint part in a device such as a valve to which a pipe is connected in a piping system of a refrigeration apparatus such as a heat pump air conditioning apparatus or a water heating apparatus. FIG. 1 is a cross-sectional view showing the state of the flareless tube connection structure 1 according to an embodiment of the present invention when the structure begins to be connected to a pipe. FIG. 2 is a cross-sectional view showing a front ferrule 4 and a back ferrule 5 as being provisionally assembled together. FIG. 3 is a cross-sectional view showing an enlargement of section A in FIG. 2. FIG. 4 is a cross-sectional view showing a joint body 2. FIG. 5 is a cross-sectional view showing an enlargement of section B in FIG. 4. FIG. 6 is a cross-sectional view showing a coupling member 3. FIG 7 is a cross-sectional view showing the front ferrule 4. FIG. 8 is a cross-sectional view showing the back ferrule 5. FIG. 9 illustrates the range in which the back ferrule 5 can be inclined when the front ferrule 4 and the back ferrule 5 are not provisionally assembled together. FIG. 10 illustrates the range in which the back ferrule 5 can be inclined when the front ferrule 4 and the back ferrule 5 are provisionally assembled together. FIG. 11 is a cross-sectional view showing the flareless tube connection structure 1 when connection to the pipe is complete. The terms "front" and "rear" used in the following description refer to orientations referencing the fastening direction, which is the direction whereby the coupling member is mounted to the joint body, and in FIG. 1, the side facing the left in the image is the "front" while the side facing the right in the image is the "rear." The term "axial direction" refers to the direction running along the axial centers of the members, and the term "diametric direction" refers to the direction that intersects the axial direction. Drawings such as FIG. 11 are images showing the ferrules 4, 5 as being wedged into a pipe P2, and in practice the ferrules 4, 5 could also be wedged into the pipe P2 in a slightly different manner than in drawings such as FIG. 11.

The flareless tube connection structure 1 has primarily a joint body 2, a coupling member 3, a front ferrule 4, and a back ferrule 5. The joint body 2 is a member attached to a pipe P1 led out form a connected-side device. The coupling member 3 is a member fitted over a pipe P2 connected to the joint body 2 and mounted to the joint body 2 by being threaded thereto. The front ferrule 4 and the back ferrule 5 are members that are formed separately from the joint body 2 and the coupling member 3 and are clamped between the joint body 2 and the coupling member 3. The pipes P1, P2 are members made of a metal such as copper.

The joint body 2 is a member made of a metal such as brass, and the joint body has a base part 21 formed with a substantially hexagonal nut-shaped profile so that it can be grasped by a universal fastening tool. A socket part 22 is formed in the front side of the base part 21, and a shaft part 23 is formed in the rear side of the base part 21. A screw part 23a composed of a male screw for threading the coupling member 3 is formed in the external periphery of the shaft part 23. An insertion hole 24 for inserting the pipe P1 is formed in the axial center portion from the socket part 22 up to the base part 21. An insertion hole 25 for inserting the pipe P2 is formed in the axial center portion from the shaft part 23 up to the base part 21. Between the insertion hole 24 and the insertion hole 25 in the axial direction is formed an uneven section 26 which forms a communication hole smaller in diameter than the insertion hole 24 and the insertion hole 25, and which regulates the axial movement of the pipes P1, P2. The distal ends of the pipes P1, P2 inserted into the insertion holes 24, 25 are brought in contact with the uneven section 26, whereby the uneven section 26 holds the distal end positions of the pipes P1, P2 steady. A cam surface 27 is formed in the distal end portion of the shaft part 23, i.e. the rear end portion of the insertion hole 25. The cam surface 27 is an inclined surface in which the front portion is a continuation of the insertion hole 25, and the diameter increases toward the rear of the cam surface. The cam surface 27 produces force for pressing the front ferrule 4 diametrically inward when the coupling member 3 is mounted to the joint body 2. The cam surface 27 is formed so that the incline angle α2 of the front portion relative to the axial center is greater than the incline angle α1 of the rear portion relative to the axial center (see FIG. 5).

The coupling member 3 is a member made of a metal such as brass, and the coupling member has a base part 31 in which an insertion hole 32 for inserting the pipe P2 is formed in the axial center portion. A fastening part 33 to be threaded onto the joint body 2 is formed in the front side of the base part 31. A screw part 33a composed of a female screw to be threaded to the screw part 23a of the joint body 2 is formed in the internal periphery of the fastening part 33. The external periphery from the base part 31 to the fastening part 33 is formed with a substantially hexagonal nut-shaped profile so that it can be grasped by a universal fastening tool. A pressing surface 34 is formed in the front portion of the base part 31. The pressing surface 34 has an inclined surface in which the axial center side retreats to the rear. When the coupling member 3 is mounted to the joint body 2, the pressing surface 34 presses on the back ferrule 5 by changing the fastening torque that fastens the coupling member 3 into force pressing forward in the axial direction and inward in the diametric direction.

The front ferrule 4 is a member made of a metal such as brass, and is formed separately from the back ferrule 5 before the coupling member 3 is mounted to the joint body 2. A pipe through-hole 41 into which the pipe P2 is inserted is formed in the axial center portion of the front ferrule 4. The front portion of the front ferrule 4 constitutes a forward part 42, and the rear portion constitutes a rearward part 43. A tapered surface 42a that decreases in diameter as it progresses forward is formed in the external peripheral surface of the forward part 42. The tapered surface 42a is formed so that an incline angle β1 relative to the axial center is smaller than the incline angle α1 of the rear portion of the cam surface 27 (see FIG. 5). A notch 42b cut in toward the diametric external periphery is formed in the internal peripheral surface of the forward part 42. The cross-sectional shape of the notch 42b along the axial direction is a substantial right triangle. The purpose of the notch is to make it easier to deform the front end portion of the forward part 42, i.e. the portion in front of the notch 42b. The external peripheral surface of the rearward part 43 is formed substantially parallel to the axial center. A tapered surface 43a that decreases in diameter as it progresses forward is formed in the internal peripheral surface of the rearward part 43. The tapered surface 43a produces force that presses the back ferrule 5 diametrically inward when the coupling member 3 is mounted to the joint body 2. The incline angle of the tapered surface 43a relative to the axial center is denoted as β2 (see FIG. 3). A provisional-assembly engaging part 44 (a front ferrule-side provisional-assembly engaging part) for enabling the front ferrule 4 and the back ferrule 5 to be provisionally assembled together is formed in the rearward part 43. The provisional-assembly engaging part 44 has primarily a provisional-assembly protruding part 45 (a front ferrule-side provisional-assembly protruding part) and a provisional-assembly enlarged-diameter part 46 (a front ferrule-side provisional-assembly enlarged-diameter part). The provisional-assembly protruding part 45 is an annular portion that protrudes diametrically inward in a position to the rear of the tapered surface 43a. The internal peripheral surface of the provisional-assembly protruding part 45 has an inclined surface 45a that increases in diameter as it progresses toward the rear. The purpose of the inclined surface 45a is to make it easier to press fit a provisional-assembly protruding part 55 (a first back ferrule-side provisional-assembly protruding part) formed in a forward part 52 of the back ferrule 5. The provisional-assembly enlarged-diameter part 46 is a portion having a larger inside diameter than the provisional-assembly protruding part 45 in a position to the front of the provisional-assembly protruding part 45, i.e. in a position axially between the tapered surface 43a and the provisional-assembly protruding part 45. The purpose of the provisional-assembly enlarged-diameter part 46 is to hold the provisional-assembly protruding part 55 inserted through the provisional-assembly protruding part 45. The inside diameter of the provisional-assembly protruding part 45 is denoted as Dfm1, and the inside diameter of the provisional-assembly enlarged-diameter part 46 is denoted as Dfm2 (see FIG. 3).

The back ferrule 5 is a member made of a metal such as brass, and is formed separately from the front ferrule 4 before the coupling member 3 is mounted to the joint body 2. A pipe through-hole 51 into which the pipe P2 is inserted is formed in the axial center portion of the back ferrule 5. The front portion of the back ferrule 5 constitutes a forward part 52, and the rear portion constitutes a rearward part 53. A tapered surface 52a that decreases in diameter as it progresses forward is formed in the external peripheral surface of the forward part 52. The tapered surface 52a is formed so that an incline angle γ1 relative to the axial center is smaller than the incline angle β2 of the tapered surface 43a of the front ferrule 4 (see FIG. 3). A provisional-assembly engaging part 54 (a first back ferrule-side provisional-assembly engaging part) for enabling the front ferrule 4 and the back ferrule 5 to be provisionally assembled together is formed in the forward part 52. The provisional-assembly engaging part 54 is capable of engaging with the provisional-assembly engaging part 44 of the front ferrule 4. The provisional-assembly engaging part 54 has primarily a provisional-assembly protruding part 55 (a first back ferrule-side provisional-assembly protruding part). The provisional-assembly protruding part 55 is an annular portion that protrudes diametrically outward in a position to the rear of the tapered surface 52a. The external peripheral surface of the provisional-assembly protruding part 55 has an inclined surface 55a, and an inclined surface 55b that is continuous with the rear side of the inclined surface 55a. The inclined surface 55a increases in diameter as it progresses toward the rear. The inclined surface 55b decreases in diameter as it progresses toward the rear. Specifically, the external peripheral surface of the provisional-assembly protruding part 55 has a substantially triangular cross-sectional shape along the axial direction. The purpose of the inclined surface 55a is to make it easier to press fit itself into the provisional-assembly protruding part 45 formed in the rearward part 43 of the front ferrule 4. The outside diameter of the provisional-assembly protruding part 55, i.e. the maximum outside diameter Dm of the provisional-assembly engaging part 54 is greater than the inside diameter Dfm1 of the provisional-assembly protruding part 45 of the front ferrule 4 and is less than the inside diameter Dfm2 of the provisional-assembly enlarged-diameter part 46 (see FIG. 3).

The front ferrule 4 and the back ferrule 5 configured as described above are capable of being provisionally assembled together before the coupling member 3 is mounted to the joint body 2. The front ferrule 4 and the back ferrule 5 are designed to be provisionally assembled so that mutual axial movement and diametric movement are restricted due to the provisional-assembly engaging part 54 formed in the forward part 52 of the back ferrule 5 and the provisional-assembly engaging part 44 formed in the rearward part 43 of the front ferrule 4 being engaged together. More specifically, the forward part 52 of the back ferrule 5 is designed to be provisionally assembled by being pressed into the rearward part 43 of the front ferrule 4 in a state in which the axial center of the front ferrule 4 and the axial center of the back ferrule 5 are aligned. Specifically, due to the inclined surface 55a of the provisional-assembly protruding part 55 being pressed into the inclined surface 45a of the provisional-assembly protruding part 45, the provisional-assembly protruding part 45 deforms so as to slightly enlarge in diameter and the provisional-assembly protruding part 55 deforms so as to slightly constrict in diameter. This deformation of the provisional-assembly protruding parts 45, 55 causes the provisional-assembly protruding part 55 to be press-fitted and inserted through the provisional-assembly enlarged-diameter part 46 via the provisional-assembly protruding part 45. After the provisional-assembly protruding part 55 is inserted into the provisional-assembly enlarged-diameter part 46, the provisional-assembly protruding parts 45, 55 are returned to their pre-deformation state or to a state near pre-deformation by post-deformation buckling, and the provisional-assembly protruding part 55 is held in a state of being inserted into the provisional-assembly enlarged-diameter part 46. Axial displacement between the front ferrule 4 and the back ferrule 5 is thereby suppressed when the coupling member 3 is mounted to the joint body 2. A gap Sb is also formed between the pipe through-hole 51 of the back ferrule 5 and the pipe P2 inserted in the pipe through-hole 51. Specifically, with the pipe P2 inserted in the pipe through-hole 51, the back ferrule 5 is able to be inclined according to the size of the gap between the pipe through-hole 51 and the pipe P2. The incline of the back ferrule 5 enabled by this gap also affects the axial displacement between the front ferrule 4 and the back ferrule 5. In view of this, the front ferrule 4 and the back ferrule 5 are herein configured so as to fulfill the following dimensional relationship. First, before the front ferrule 4 and the back ferrule 5 are provisionally assembled, the maximum angle at which the back ferrule 5 can be inclined relative to the axial center of the pipe P2, due to the gap Sb between the hole diameter Db of the pipe through-hole 51 and the outside diameter Dp of the pipe P2, is denoted as the pre-provisional-assembly inclinable angle θ0 (see FIG. 9). After the front ferrule 4 and the back ferrule 5 have been provisionally assembled, the maximum angle at which the back ferrule 5 can be inclined relative to the axial center of the pipe P2, due to the engaging between the provisional-assembly engaging part 54 of the back ferrule 5 and the provisional-assembly engaging part 44 of the front ferrule 4, is denoted as the post-provisional-assembly inclinable angle θ1 (see FIG. 10). The axial length of the back ferrule 5 is denoted as Lb. After the front ferrule 4 and the back ferrule 5 have been provisionally assembled, the displacement at which the back ferrule 5 can move in the axial direction relative to the front ferrule 4, due to the engaging between the provisional-assembly engaging part 54 of the back ferrule 5 and the provisional-assembly engaging part 44 of the front ferrule 4, is denoted as L1 (see FIG. 10). In this case, concerning the front ferrule 4 and the back ferrule 5 in terms of the incline angles, the ferrules are configured so as to fulfill the relationship θ1 < θ0. Specifically, the provisional-assembly engaging part 54 of the back ferrule 5 is engaged with the provisional-assembly engaging part 44 of the front ferrule 4 in a state of being settled at the incline angle θ1, which is smaller than the angle at which the provisional-assembly engaging part 54 can be inclined due to the size of the gap Sb between the pipe through-hole 51 and the pipe P2 (the incline angle θ0). The incline of the back ferrule 5 herein is limited due to the external peripheral end of the provisional-assembly engaging part 54 being in contact with the internal peripheral end of the provisional-assembly engaging part 44. Concerning the front ferrule 4 and the back ferrule 5 in terms of the axial displacement, the ferrules are configured so as to fulfill the relationship L1 < Sb × Dm / Lb. Specifically, the provisional-assembly engaging part 54 of the back ferrule 5 is engaged with the provisional-assembly engaging part 44 of the front ferrule 4 in a state of being settled at the axial displacement L1, which is smaller than the displacement at which the provisional-assembly engaging part 54 can be inclined according to the size of the gap Sb between the pipe through-hole 51 and the pipe P2 (the axial displacement L0, see FIG. 9). The axial movement of the back ferrule 5 allowed by the incline is limited due to the external peripheral end of the provisional-assembly engaging part 54 being in contact with the internal peripheral end of the provisional-assembly engaging part 44. The axial displacement between the front ferrule 4 and the back ferrule 5 can thereby be further suppressed when the coupling member 3 is mounted to the joint body 2.

### <Method>

The following is a description of a tube connection method using the flareless tube connection structure 1 of the present embodiment configured as described above.

Prior to connecting the pipe P2, the joint body 2 is attached to the pipe P1 led out from the connected-side device. Next, to connect the pipe P2 using the flareless tube connection structure 1, first the pipe P2 to be connected is inserted into the insertion hole 32 of the coupling member 3, and the coupling member 3 is fitted over the pipe P2. Next, the pipe P2 is inserted into the pipe through-holes 41, 51 of the front ferrule 4 and the back ferrule 5 which have been provisionally assembled together in advance, and the front ferrule 4 and the back ferrule 5 are fitted over the pipe P2. Provisionally assembling the front ferrule 4 and the back ferrule 5 is not limited to being done in advance before the pipe P2 is inserted into the front ferrule 4 and the back ferrule 5. For example, when the pipe P2 is inserted into the front ferrule 4 and the back ferrule 5 when they have not been provisionally assembled together, the ferrules 4, 5 may be provisionally assembled by clamping the back ferrule 5 between the front ferrule 4 and the coupling member 3 in the axial direction. The front end portion of the pipe P2 is then inserted into the insertion hole 25 of the joint body 2 and the pipe P2 is brought in contact with the uneven section 26, in which state the coupling member 3 is threaded onto the joint body 2 with the provisionally assembled front ferrule 4 and the back ferrule 5 clamped therebetween in the axial direction.

In this state, when the coupling member 3 is fastened to the joint body 2 by hand, the rearward part 53 of the back ferrule 5 is pressed forward by the pressing surface 34 of the coupling member 3. The rearward part 43 of the front ferrule 4, which is provisionally assembled with the back ferrule 5, is also pressed forward by the forward part 52 of the back ferrule 5. The tapered surface 42a of the forward part 42 of the front ferrule 4 thereby comes in contact with the rear portion of the cam surface 27 of the joint body 2. At this time, the portion of the forward part 42 of the front ferrule 4 that is in front of the notch 42b is bent diametrically inward and provisionally snared on the front portion of the cam surface 27 (the portion having the incline angle α2). The tapered surface 52a of the forward part 52 of the back ferrule 5 also comes in contact with the tapered surface 43a of the rearward part 43 of the front ferrule 4.

In this state, a universal fastening tool is used to fasten the coupling member 3 to the joint body 2. The tapered surface 42a is then first pressed into the cam surface 27, and the cam surface 27, which is an inclined surface, produces force that presses the forward part 42 of the front ferrule 4 diametrically inward. This pressing force causes the front portion of the forward part 42 to wedge into the pipe P2. At this time, the incline angle β1 of the tapered surface 42a is less than the incline angle α1 of the rear portion of the cam surface 27, and the force pressing the forward part 42 of the front ferrule 4 diametrically inward can therefore be increased. This results in the formation of a seal part 61 between the cam surface 27 of the joint body 2 and the tapered surface 42a of the front ferrule 4, and a seal part 62 between the front end of the front ferrule 4 and the pipe P2.

When the front ferrule 4 is wedged further into the pipe P2, a seal part 63 is then formed between the tapered surface 43a of the front ferrule 4 and the tapered surface 52a of the back ferrule 5, and a seal part 64 is formed between the front end of the back ferrule 5 and the pipe P2. Specifically, the tapered surface 52a is pressed into the tapered surface 43a, and the tapered surface 43a, which is an inclined surface, produces force that presses the forward part 52 of the back ferrule 5 diametrically inward. This pressing force causes the front portion of the forward part 52 to wedge into the pipe P2. At this time, the incline angle γ1 of the tapered surface 52a is less than the incline angle β2 of the tapered surface 43a, and the force pressing the forward part 52 of the back ferrule 5 diametrically inward can therefore be increased.

A pipe connection is thus established using the flareless tube connection structure 1 of the present embodiment. In the flareless tube connection structure 1 at this time, because the front ferrule 4 and the back ferrule 5 are provisionally assembled together, the front ferrule 4 and the back ferrule 5 become clamped between the joint body 2 and the coupling member 3 while the provisional assembly remains intact. Therefore, axial displacement between the front ferrule 4 and the back ferrule 5 is suppressed, and the front ends of the ferrules 4, 5 are reliably wedged into the pipe P2. Fluid is thereby impeded from leaking through the seal parts 62, 64 formed by the wedging of the front ends of the ferrules 4, 5 in the pipe P2.

### <Characteristics>

There follows a description of the characteristics of the flareless tube connection structure 1 of the present embodiment configured in the above manner.

### (A)

In the flareless tube connection structure 1, as described above, the front ferrule 4 and the back ferrule 5 formed separately from each other are designed to be clamped between the joint body 2 and the coupling member 3 while in a state of being provisionally assembled together.

In the flareless tube connection structure 1, axial displacement between the front ferrule 4 and the back ferrule 5 can thereby be suppressed. Therefore, the wedging of the ferrules 4, 5 into the pipe P2 is ensured to be sufficient, and the fluid flowing in the pipe P2 is impeded from leaking out.

### (B)

In the flareless tube connection structure 1, the ferrules can be provisionally assembled so that their mutual movement axially and diametrically is limited, due to the engaging between the provisional-assembly engaging part 54 (the first back ferrule-side provisional-assembly engaging part) and the provisional-assembly engaging part 44 (the front ferrule-side provisional-assembly engaging part), as described above.

### (C)

In the flareless tube connection structure 1, the front ferrule 4 and the back ferrule 5 are provisionally assembled so as to fulfill the relationship θ1 < θ0, as well as the relationship L1 < Sb × Dm / Lb, as described above. This limits the incline in the back ferrule 5 that can be produced by the gap Sb between the hole diameter Db of the pipe through-hole 51 and the outside diameter Dp of the pipe P2.

In the flareless tube connection structure 1, axial displacement between the front ferrule 4 and the back ferrule 5 can thereby be suppressed even further. In the description above, both of the relationships θ1 < θ0 and L1 < Sb × Dm / Lb are fulfilled, but it would also be sufficient if only one was fulfilled.

### (D)

In the flareless tube connection structure 1, the provisional-assembly engaging part 54 (the first back ferrule-side provisional-assembly engaging part) is the provisional-assembly protruding part 55 (a first back ferrule-side provisional-assembly protruding part) which protrudes diametrically outward. The provisional-assembly engaging part 44 (the front ferrule-side provisional-assembly engaging part) has the provisional-assembly protruding part 45 (the front ferrule-side provisional-assembly protruding part) which protrudes diametrically inward, and the provisional-assembly enlarged-diameter part 46 (the front ferrule-side provisional-assembly enlarged-diameter part) which has a greater inside diameter than the provisional-assembly protruding part 45. The provisional-assembly protruding part 55 (a first back ferrule-side provisional-assembly protruding part) is inserted through and held in the provisional-assembly enlarged-diameter part 46 (the front ferrule-side provisional-assembly enlarged-diameter part) via the provisional-assembly protruding part 45 (the front ferrule-side provisional-assembly protruding part) as described above. Therefore, the front ferrule 4 and the back ferrule 5 are engaged and provisionally assembled in a state of overlapping in the axial direction.

It is thereby possible in the flareless tube connection structure 1 to impede undoing of the provisionally assembled state between the front ferrule 4 and the back ferrule 5.

### (E)

In the flareless tube connection structure 1, the provisional-assembly engaging part 54 (the first back ferrule-side provisional-assembly engaging part) is press-fitted into the provisional-assembly protruding part 55 (a first back ferrule-side provisional-assembly protruding part) and inserted through the provisional-assembly enlarged-diameter part 46 (the front ferrule-side provisional-assembly enlarged-diameter part) as described above.

It is thereby possible in the flareless tube connection structure 1 to provisionally assemble the front ferrule 4 and the back ferrule 5 by pressing them each other.

### <Modification 1>

In the flareless tube connection structure 1 of the above embodiment, the provisional assembly structure of the front ferrule 4 and the back ferrule 5 is a structure in which the provisional-assembly protruding part 55 is press-fitted into the provisional-assembly protruding part 45 and inserted through the provisional-assembly enlarged-diameter part 46, but is not limited as such.

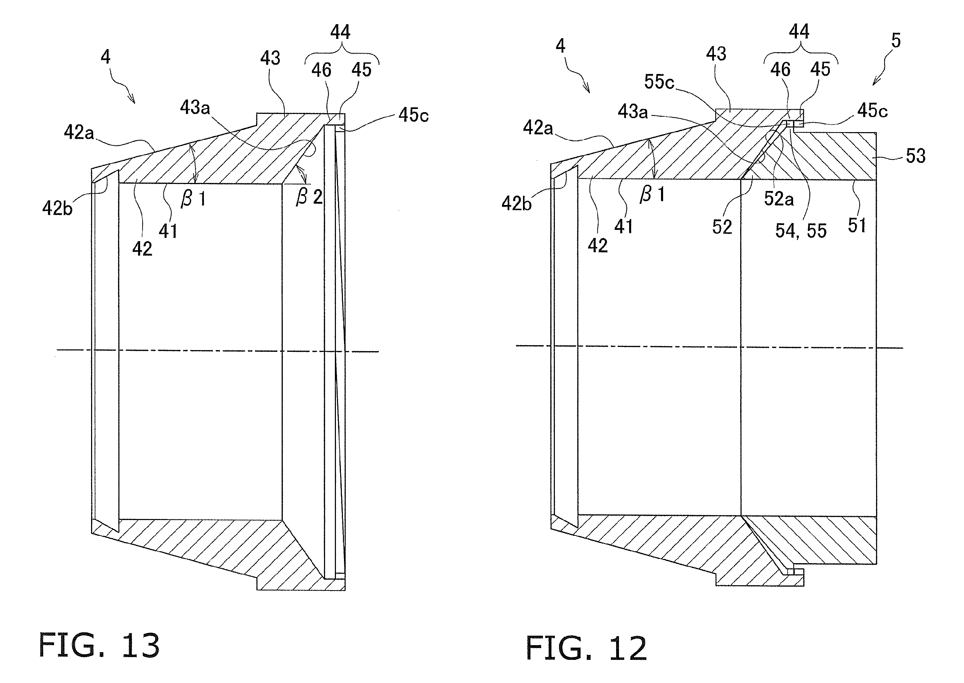

For example, a structure may be used in which a male screw 55c is formed on the provisional-assembly protruding part 55, a female screw 45c is formed on the provisional-assembly protruding part 45, and the provisional-assembly protruding part 55 is inserted through the provisional-assembly enlarged-diameter part 46 by threading the male screw 55c and the female screw 45c together, as shown in FIGS. 12 to 14. Aside from the provisional-assembly protruding part 55 and the provisional-assembly protruding part 45, the configuration is identical to that of the above embodiment, and descriptions thereof are therefore omitted.

Similar to the above embodiment, the front ferrule 4 and the back ferrule 5 can be provisionally assembled by the provisional-assembly engaging parts 44, 54 in the present modification as well, whereby axial displacement between the front ferrule 4 and the back ferrule 5 can be suppressed.

### <Modification 2>

In the flareless tube connection structure 1 of the above embodiment, the provisional assembly structure of the front ferrule 4 and the back ferrule 5 is a structure in which the provisional-assembly protruding part 55 is press-fitted into the provisional-assembly protruding part 45 and inserted through the provisional-assembly enlarged-diameter part 46, but is not limited as such.

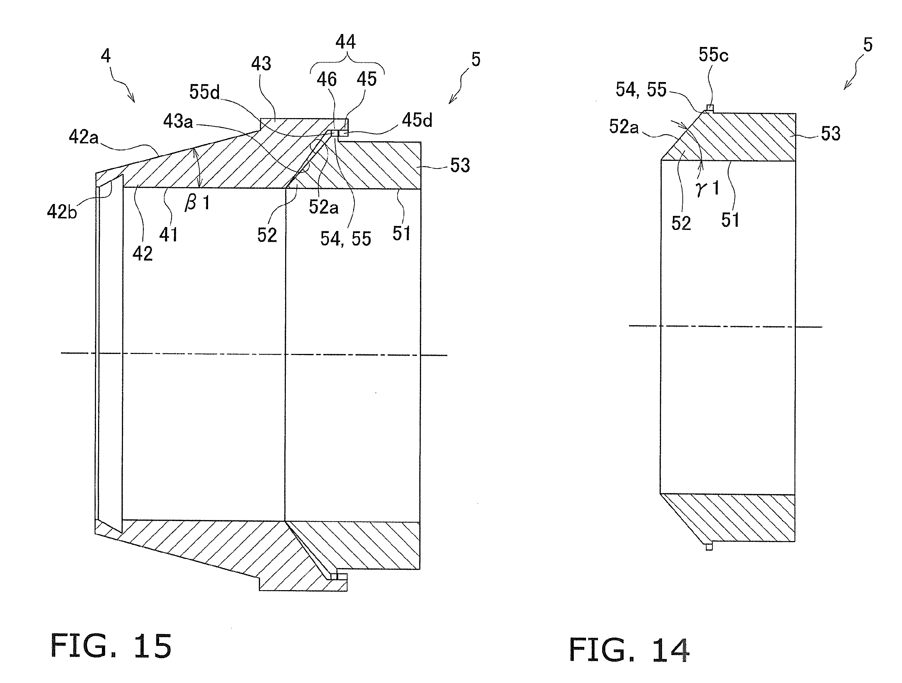

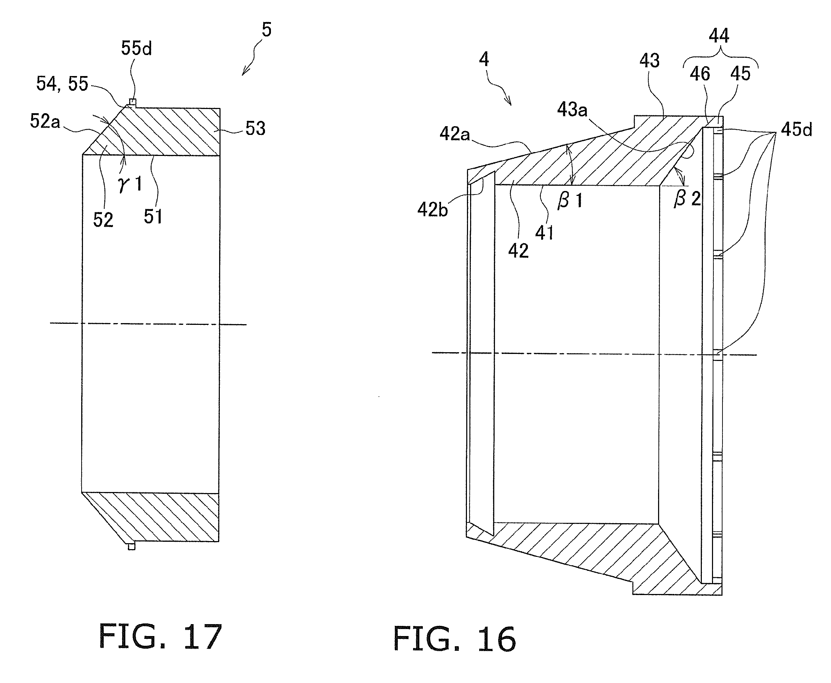

For example, a structure may be used in which spline teeth 55d, 45d are formed on the provisional-assembly protruding part 55 and the provisional-assembly protruding part 45, and the provisional-assembly protruding part 55 is inserted through the provisional-assembly enlarged-diameter part 46 by the spline engagement between the spline teeth 55d, 45d, as shown in FIGS. 15 to 17. Aside from the provisional-assembly protruding part 55 and the provisional-assembly protruding part 45, the configuration is identical to that of the above embodiment, and descriptions thereof are therefore omitted.

Similar to the above embodiment, the front ferrule 4 and the back ferrule 5 can be provisionally assembled by the provisional-assembly engaging parts 44, 54 in the present modification as well, whereby axial displacement between the front ferrule 4 and the back ferrule 5 can be suppressed.

### <Modification 3>

The flareless tube connection structures 1 of the above embodiment and of Modifications 1 and 2 were configured so that the front ferrule 4 and the back ferrule 5 could be provisionally assembled together, but the structures may also be configured so that the coupling member 3 and the back ferrule 5 can be provisionally assembled together as well.

For example, a provisional assembly structure for the front ferrule 4 and the back ferrule 5 may be used which is similar to that of the above embodiment (see FIGS. 1 to 11), and a provisional assembly structure for the back ferrule 5 and the coupling member 3 may also be used.

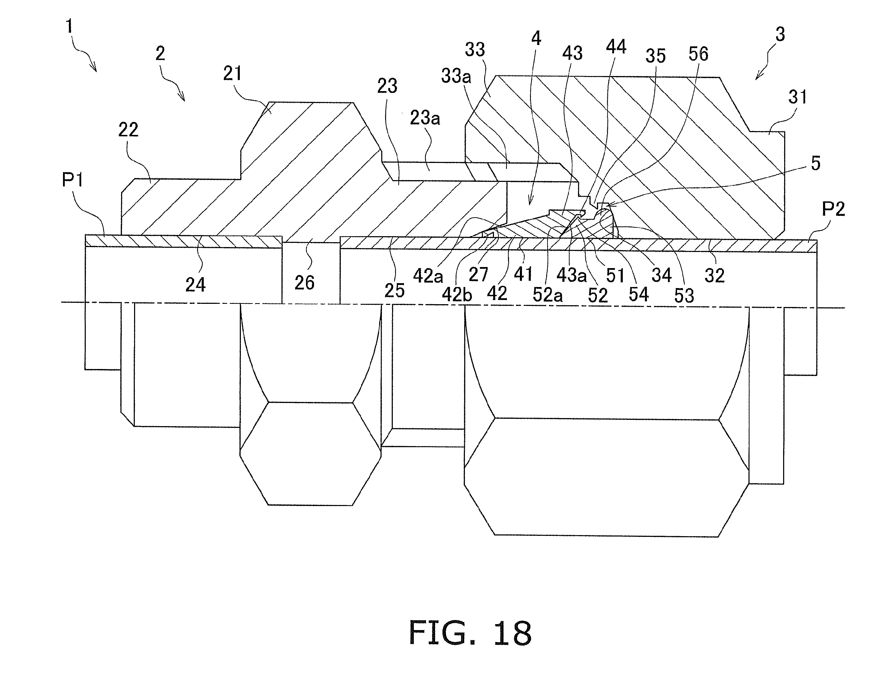

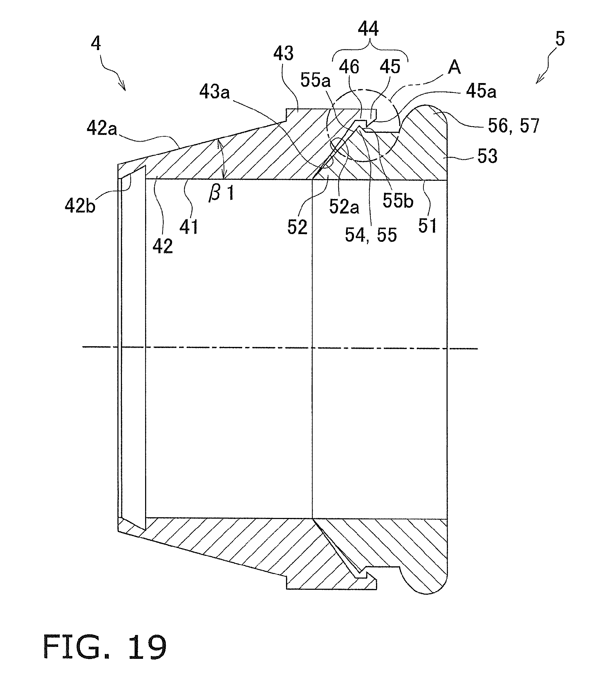

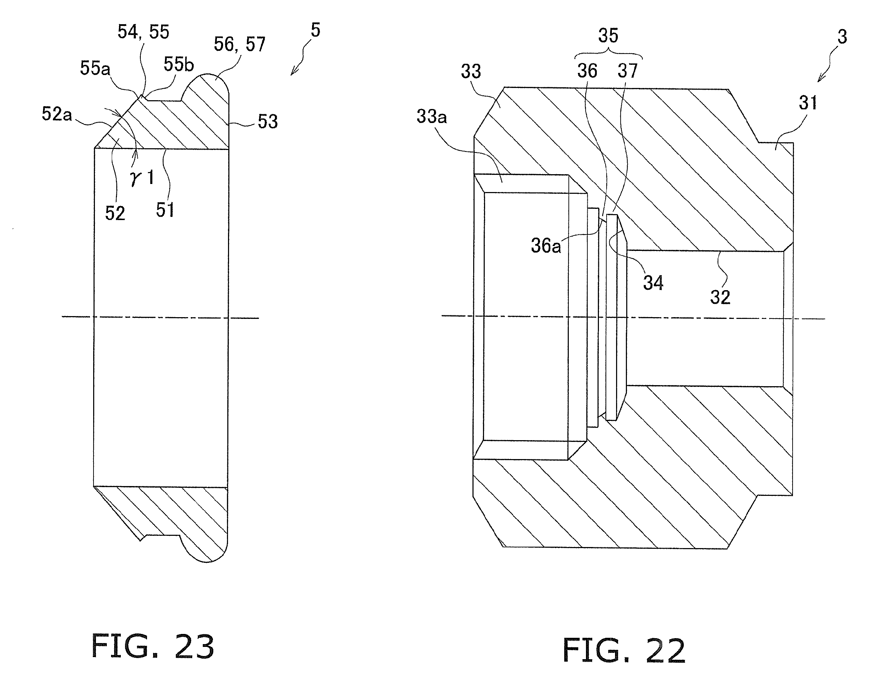

In the flareless tube connection structure 1 of the present modification, the configurations of the coupling member 3 and the back ferrule 5 differ from those of the above embodiment, as shown in FIGS. 18 to 24. Therefore, the following description centers on the configurations of the back ferrule 5 and the coupling member 3, and configurations other than those of the back ferrule 5 and the coupling member 3 are not described.

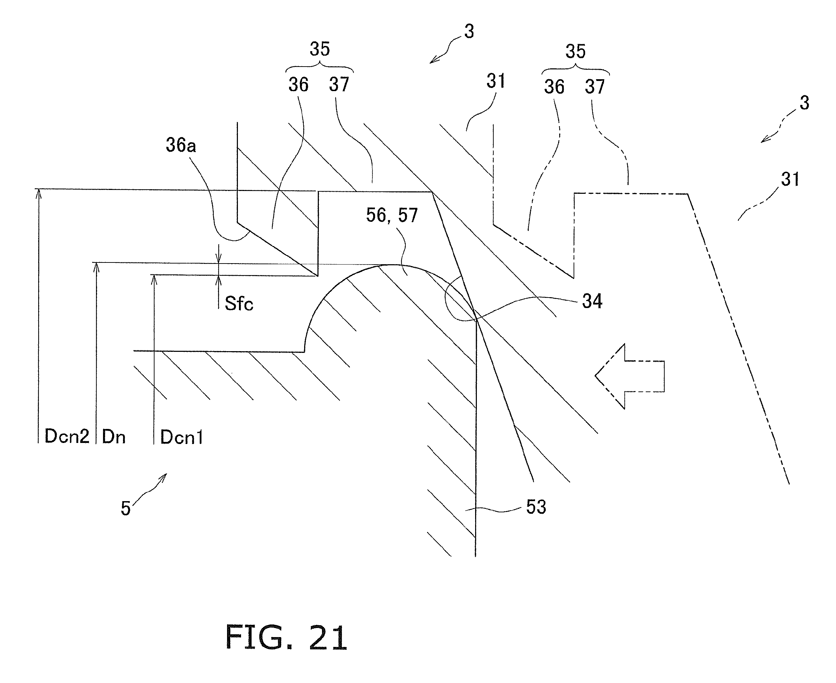

The coupling member 3 is a member made of a metal such as brass, having a base part 31 in which an insertion hole 32 and a pressing surface 34 are formed, and a fastening part 33 in which a threaded part 33a is formed, similar to the above embodiment. In the present modification, a provisional-assembly engaging part 35 (a coupling member-side provisional-assembly engaging part) for enabling the back ferrule 5 and the coupling member 3 to be provisionally assembled is also formed in the front portion of the base part 31. The provisional-assembly engaging part 35 is positioned in the front side of the pressing surface 34 and the rear side of the threaded part 33a. The provisional-assembly engaging part 35 has primarily a provisional-assembly protruding part 36 (a coupling member-side provisional-assembly protruding part) and a provisional-assembly enlarged-diameter part 37 (a coupling member-side provisional-assembly enlarged-diameter part). The provisional-assembly protruding part 36 is an annular portion that protrudes diametrically inward in a position to the front of the pressing surface 34. The internal peripheral surface of the provisional-assembly protruding part 36 has an inclined surface 36a that increases in diameter as it progresses toward the front. The purpose of the inclined surface 36a is to make it easier to press fit a provisional-assembly protruding part 57 (a second back ferrule-side provisional-assembly protruding part) formed in the rearward part 53 of the back ferrule 5. The provisional-assembly enlarged-diameter part 37 is a portion having a larger inside diameter than the provisional-assembly protruding part 36 in a position to the rear of the provisional-assembly protruding part 36, i.e. in a position axially between the pressing surface 34 and the provisional-assembly protruding part 36. The purpose of the provisional-assembly enlarged-diameter part 37 is to hold the provisional-assembly protruding part 57 inserted through the provisional-assembly protruding part 36. The inside diameter of the provisional-assembly protruding part 36 is denoted as Dcn1, and the inside diameter of the provisional-assembly enlarged-diameter part 37 is denoted as Dcn2 (see FIG. 21).

The back ferrule 5 is a member made of a metal such as brass, and a pipe through-hole 51 is formed in the axial center portion thereof, similar to the above embodiment. A tapered surface 52a and a provisional-assembly engaging part 54 having a provisional-assembly protruding part 55 are formed in the forward part 52 constituting the front portion of the back ferrule 5. In the present modification, a provisional-assembly engaging part 56 (a second back ferrule-side provisional-assembly engaging part) for enabling the back ferrule 5 and the coupling member 3 to be provisionally assembled is also formed in the rearward part 53 constituting the rear portion of the back ferrule 5. The provisional-assembly engaging part 56 can engage with the provisional-assembly engaging part 35 of the coupling member 3. The provisional-assembly engaging part 56 has primarily the provisional-assembly protruding part 57 (the second back ferrule-side provisional-assembly protruding part). The provisional-assembly protruding part 57 is an annular portion that protrudes diametrically outward. The cross-sectional shape of the provisional-assembly protruding part 57 along the axial direction is an arcuate shape. Specifically, the external peripheral surface of the provisional-assembly protruding part 57 is an arcuate surface such that the portion in the axially central vicinity protrudes the farthest diametrically outward, and the diameter decreases as it progresses both forward and backward away from this portion. The provisional-assembly protruding part 57 is designed to come in contact with the pressing surface 34 of the coupling member 3 when the coupling member 3 is mounted to the joint body 2. The outside diameter of the provisional-assembly protruding part 57, i.e. the maximum outside diameter Dn of the provisional-assembly engaging part 56 is greater than the inside diameter Dcn1 of the provisional-assembly protruding part 36 of the coupling member 3 and is less than the inside diameter Dcn2 of the provisional-assembly enlarged-diameter part 37 (see FIG. 21).

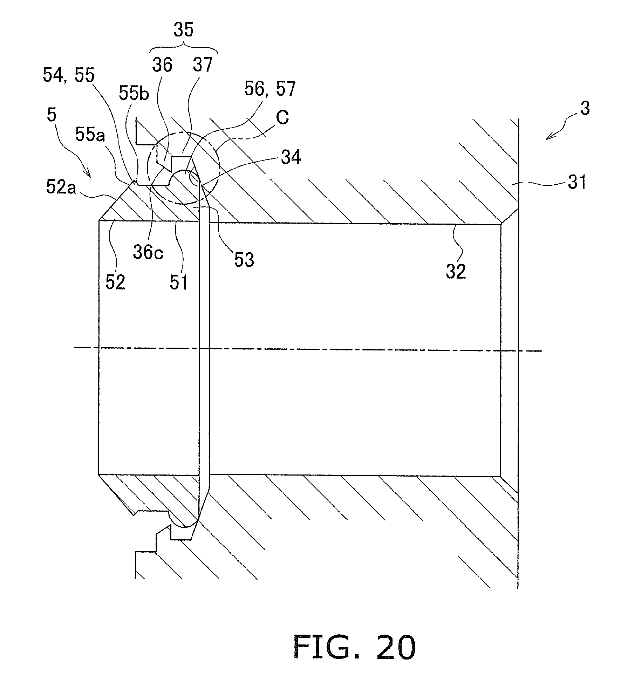

The back ferrule 5 and the coupling member 3 configured as described above are capable of being provisionally assembled together before the coupling member 3 is mounted to the joint body 2 (see FIG. 20). The back ferrule 5 and the coupling member 3 are designed to be provisionally assembled so that mutual axial movement and diametric movement are restricted due to the provisional-assembly engaging part 56 formed in the rearward part 53 of the back ferrule 5 and the provisional-assembly engaging part 35 formed in the base part 31 of the coupling member 3 being engaged together. More specifically, the rearward part 53 of the back ferrule 5 is designed to be provisionally assembled by being pressed into the base part 31 of the coupling member 3 in a state in which the axial center of the back ferrule 5 and the axial center of the coupling member 3 are aligned. Specifically, due to the provisional-assembly protruding part 57 being pressed into the inclined surface 36a of the provisional-assembly protruding part 36, the provisional-assembly protruding part 36 deforms so as to slightly enlarge in diameter and the provisional-assembly protruding part 57 deforms so as to slightly constrict in diameter. This deformation of the provisional-assembly protruding parts 36, 57 causes the provisional-assembly protruding part 57 to be press-fitted and inserted through the provisional-assembly enlarged-diameter part 37 via the provisional-assembly protruding part 36. After the provisional-assembly protruding part 57 is inserted into the provisional-assembly enlarged-diameter part 37, the provisional-assembly protruding parts 36, 57 are returned to their pre-deformation state or to a state near pre-deformation by post-deformation buckling, and the provisional-assembly protruding part 57 is held in a state of being inserted into the provisional-assembly enlarged-diameter part 37. The front ferrule 4, the back ferrule 5, and the coupling member 3 can thereby be coupled to the joint body 2 in a state of being provisionally assembled together. The difference between the outside diameter Dm of the provisional-assembly engaging part 54 of the back ferrule 5 and the inside diameter Dfm1 of the provisional-assembly protruding part 45 of the front ferrule 4 is denoted as the ferrule-ferrule press-fitting margin Sff (see FIG. 3). The difference between the outside diameter Dn of the provisional-assembly protruding part 57 of the back ferrule 5 and the inside diameter Dcn1 of the provisional-assembly protruding part 36 of the coupling member 3 is denoted as the ferrule-coupling member press-fitting margin Sfc (see FIG. 21). The strength of the provisional-assembly protruding part 45 of the front ferrule 4 is denoted as the front ferrule-side provisional-assembly protruding part strength Ff. The strength of the provisional-assembly protruding part 36 of the coupling member 3 is denoted as the coupling member-side provisional-assembly protruding part strength Fc. In this case, the front ferrule 4, the back ferrule 5, and the coupling member 3, in terms of the press-fitting margins of the protruding parts, are configured so as to fulfill the relationship Sff < Sfc. When the front ferrule 4 and the coupling member 3 are pressed together with the back ferrule 5 clamped between the front ferrule 4 and the coupling member 3, the front ferrule 4 and the back ferrule 5, which have the smaller press-fitting margin, are provisionally assembled first. Then the back ferrule 5 and the coupling member 3, which have the greater press-fitting margin, are provisionally assembled. The front ferrule 4, the back ferrule 5, and the coupling member 3, in terms of the strength of the protruding parts, are configured so as to fulfill the relationship Ff < Fc. When the front ferrule 4 and the coupling member 3 are pressed together with the back ferrule 5 clamped between the front ferrule 4 and the coupling member 3, the front ferrule 4 and the back ferrule 5, which have less protruding part strength, are provisionally assembled first. Then the back ferrule 5 and the coupling member 3, which have greater protruding part strength, are provisionally assembled. Thus, the front ferrule 4, the back ferrule 5, and the coupling member 3 can be provisionally assembled smoothly by appropriately setting the press-fitting margins and the strengths of the protruding parts as described above.

The following is a description of a tube connection method using the flareless tube connection structure 1 of the present modification configured as described above.

Prior to connecting the pipe P2, the joint body 2 is attached to the pipe P1 led out from the connected-side device. Next, to connect the pipe P2 by means of the flareless tube connection structure 1, first the pipe P2 to be connected is inserted into the insertion hole 32 of the coupling member 3, and the coupling member 3 is fitted over the pipe P2. Next, the pipe P2 is inserted into the pipe through-holes 31, 41, 51 of the front ferrule 4, the back ferrule 5, and the coupling member 3 which have been provisionally assembled together in advance, and the front ferrule 4, the back ferrule 5, and the coupling member 3 are fitted over the pipe P2. Provisionally assembling the front ferrule 4, the back ferrule 5, and the coupling member 3 is not limited to being done in advance before the pipe P2 is inserted into the front ferrule 4, the back ferrule 5, and the coupling member 3. For example, when the pipe P2 is inserted into the front ferrule 4, the back ferrule 5, and the coupling member 3 when they have not been provisionally assembled together, the ferrules 4, 5 and the coupling member 3 may be provisionally assembled by clamping the back ferrule 5 between the front ferrule 4 and the coupling member 3 in the axial direction. The front end portion of the pipe P2 is then inserted into the insertion hole 25 of the joint body 2 and the pipe P2 is brought in contact with the uneven section 26, in which state the coupling member 3 is threaded onto the joint body 2 with the front ferrule 4 and the back ferrule 5 provisionally assembled.

In this state, when the coupling member 3 is fastened to the joint body 2 by hand, the rearward part 53 of the back ferrule 5 is pressed forward by the pressing surface 34 of the coupling member 3, similar to the above embodiment. The rearward part 43 of the front ferrule 4, which is provisionally assembled with the back ferrule 5, is also pressed forward by the forward part 52 of the back ferrule 5. The tapered surface 42a of the forward part 42 of the front ferrule 4 thereby comes in contact with the rear portion of the cam surface 27 of the joint body 2. At this time, the portion of the forward part 42 of the front ferrule 4 that is in front of the notch 42b is bent diametrically inward and provisionally snared on the front portion of the cam surface 27 (the portion having the incline angle α2). The tapered surface 52a of the forward part 52 of the back ferrule 5 also comes in contact with the tapered surface 43a of the rearward part 43 of the front ferrule 4.

In this state, a universal fastening tool is used to fasten the coupling member 3 to the joint body 2. Then, similar to the above embodiment, the tapered surface 42a is then first pressed into the cam surface 27, and the front portion of the forward part 42 is wedged into the pipe P2. This results in the formation of a seal part 61 between the cam surface 27 of the joint body 2 and the tapered surface 42a of the front ferrule 4, and a seal part 62 between the front end of the front ferrule 4 and the pipe P2.

When the front ferrule 4 is wedged further into the pipe P2, a seal part 63 is then formed between the tapered surface 43a of the front ferrule 4 and the tapered surface 52a of the back ferrule 5, and a seal part 64 is formed between the front end of the back ferrule 5 and the pipe P2, similar to the above embodiment. Specifically, the tapered surface 52a is pressed into the tapered surface 43a, and the front portion of the forward part 52 is wedged into the pipe P2. At this time, the rearward part 53 of the back ferrule 5 is not only pressed forward by the pressing surface 34 of the coupling member 3, but is also pressed diametrically inward. Therefore, the provisional-assembly protruding part 57 deforms in the back ferrule 5 provisionally assembled with the coupling member 3, and because this deformation is uneven in the circumferential direction, there is a risk of fluid leaking out. However, because the cross-sectional shape of the provisional-assembly protruding part 57 along the axial direction is an arcuate shape in the present modification, the deformation of the provisional-assembly protruding part 57 is impeded and uneven deformation in the circumferential direction is prevented.

In this manner is a pipe connection established using the flareless tube connection structure 1 of the present modification. In the flareless tube connection structure 1 at this time, because the front ferrule 4, the back ferrule 5, and the coupling member 3 are provisionally assembled together, the front ferrule 4 and the back ferrule 5 become clamped between the joint body 2 and the coupling member 3 while the provisional assembly remains intact. Therefore, axial displacement between the front ferrule 4 and the back ferrule 5 is suppressed, and the front ends of the ferrules 4, 5 are reliably wedged into the pipe P2, similar to the above embodiment. Fluid is thereby impeded from leaking through the seal parts 62, 64 formed by the wedging of the front ends of the ferrules 4, 5 in the pipe P2.

Next is a description of the characteristics of the flareless tube connection structure 1 of the present modification configured in the above manner.

In the present modification, similar to the above embodiment, the front ferrule 4 and the back ferrule 5 can be provisionally assembled by the provisional-assembly engaging parts 44, 54, and axial displacement between the front ferrule 4 and the back ferrule 5 can thereby be suppressed.

Moreover, in the flareless tube connection structure 1 of the present modification, the front ferrule 4, the back ferrule 5, and the coupling member 3 are designed to be capable of being coupled with the joint body 2 in a state of being provisionally assembled together, as described above.

It is thereby possible to improve workability when mounting the coupling member 3 to the joint body 2 in the flareless tube connection structure 1 of the present modification.

In the flareless tube connection structure 1 of the present modification, the coupling member 3 and the back ferrule 5 can be provisionally assembled in a state of restricted axial and diametric mutual movement, due to the engaging of the provisional-assembly engaging part 56 (the second back ferrule-side provisional-assembly engaging part) and the provisional-assembly engaging part 35 (the coupling member-side provisional-assembly engaging part) as described above.

It is thereby possible in the flareless tube connection structure 1 of the present modification to provisionally assemble the front ferrule 4, the back ferrule 5, and the coupling member 3 in a state of restricted axial and diametric mutual movement, due to the engaging of the front ferrule 4, the back ferrule 5, and the coupling member 3.

In the flareless tube connection structure 1 of the present modification, the provisional-assembly engaging part 56 (the second back ferrule-side provisional-assembly engaging part) is the provisional-assembly protruding part 57 (the second back ferrule-side provisional-assembly protruding part) which protrudes diametrically outward. The provisional-assembly engaging part 35 (the coupling member-side provisional-assembly engaging part) has the provisional-assembly protruding part 36 (the coupling member-side provisional-assembly protruding part) which protrudes diametrically inward, and the provisional-assembly enlarged-diameter part 37 (the coupling member-side provisional-assembly enlarged-diameter part) which has a greater inside diameter than the provisional-assembly protruding part 36. The provisional-assembly engaging part 56 (the second back ferrule-side provisional-assembly engaging part) is inserted through and held in the provisional-assembly enlarged-diameter part 37 (the coupling member-side provisional-assembly enlarged-diameter part) via the provisional-assembly protruding part 36 (the coupling member-side provisional-assembly protruding part). Therefore, the coupling member 3 and the back ferrule 5 are engaged and provisionally assembled in a state of overlapping in the axial direction.

It is thereby possible in the flareless tube connection structure 1 of the present modification to impede undoing of the provisionally assembled state between the coupling member 3 and the back ferrule 5, and to impede undoing of the provisionally assembled state between the front ferrule 4, the back ferrule 5, and the coupling member 3.

In the flareless tube connection structure 1 of the present modification, the provisional-assembly engaging part 56 (the second back ferrule-side provisional-assembly engaging part) is press-fitted into the provisional-assembly protruding part 36 (the coupling member-side provisional-assembly protruding part) and is inserted through the provisional-assembly enlarged-diameter part 37 (the coupling member-side provisional-assembly enlarged-diameter part), as described above.

It is thereby possible for the back ferrule 5 and the coupling member 3 to be provisionally assembled by being pressed together in the flareless tube connection structure 1 of the present modification. With the back ferrule 5 clamped between the front ferrule 4 and the coupling member 3, these three members can be provisionally assembled by pressing the front ferrule 4 and the coupling member 3 together in the axial direction. The provisional assembly structure of the front ferrule 4 and the back ferrule 5 may also be a provisional assembly structure that uses screws and splines such as those of Modifications 1 and 2 (see FIGS. 12 to 17), instead of a structure in which the provisional-assembly protruding part 55 is press-fitted into the provisional-assembly protruding part 45 and inserted through the provisional-assembly enlarged-diameter part 46. However, taking into account the advantage of being able to provisionally assemble the three members all together, a structure may be used in which the provisional-assembly protruding part 55 is press-fitted into the provisional-assembly protruding part 45 and inserted through the provisional-assembly enlarged-diameter part 46, similar to the provisional assembly structure of the back ferrule 5 and the coupling member 3.

In the flareless tube connection structure 1 of the present modification, the cross-sectional shape of the provisional-assembly engaging part 56 (the second back ferrule-side provisional-assembly engaging part) along the axial direction is an arcuate shape as described above.

In the flareless tube connection structure 1 of the present modification, the provisional-assembly engaging part 56 is prevented from deforming unevenly in the circumferential direction, which contributes to suppressing fluid leakage. The cross-sectional shape of the provisional-assembly engaging part 56 along the axial direction may be a substantially triangular cross-sectional shape (see FIG. 3), but herein is an arcuate shape to account for the risk of uneven circumferential deformation and fluid leakage as described above.

In the flareless tube connection structure 1 of the present modification, the front ferrule 4, the back ferrule 5, and the coupling member 3 are configured so as to fulfill the relationship Sff < Sfc as well as the relationship Ff < Fc as described above. When the back ferrule 5 is clamped and provisionally assembled between the front ferrule 4 and the coupling member 3, the back ferrule 5 and the coupling member 3 are provisionally assembled after the front ferrule 4 and the back ferrule 5 have been provisionally assembled.

It is thereby possible to provisionally assemble the front ferrule 4, the back ferrule 5, and the coupling member 3 smoothly in the flareless tube connection structure 1 of the present modification. The relationship Sff < Sfc and the relationship Ff < Fc are both fulfilled in the above description, but it is sufficient that only one be fulfilled.

### <Modification 4>

In the flareless tube connection structure 1 of Modification 3, the provisional assembly structure of the back ferrule 5 and the coupling member 3 is a structure in which the provisional-assembly protruding part 57 is press-fitted into the provisional-assembly protruding part 36 and inserted through the provisional-assembly enlarged-diameter part 37, but is not limited as such.

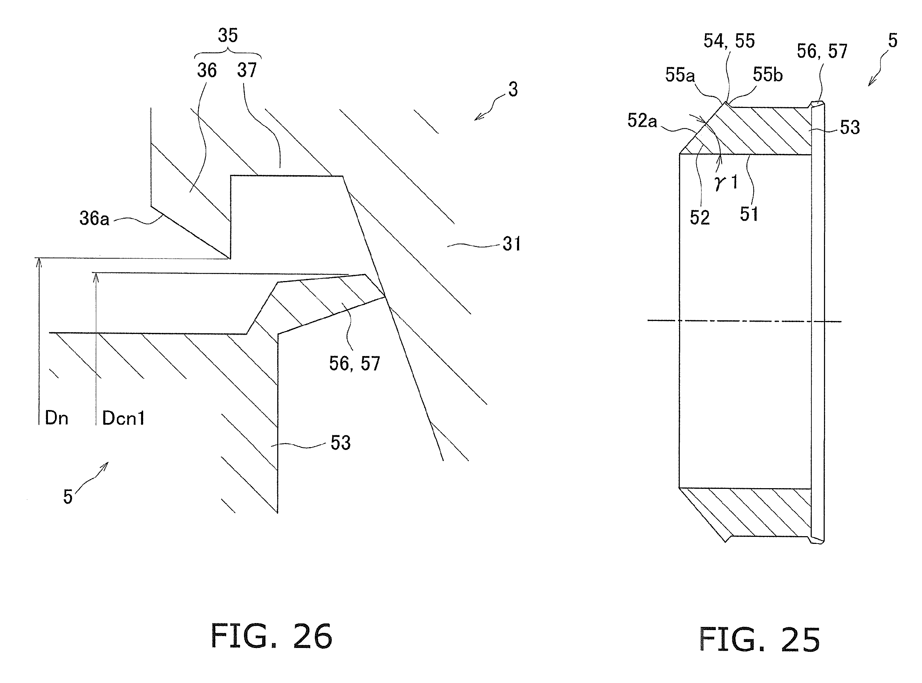

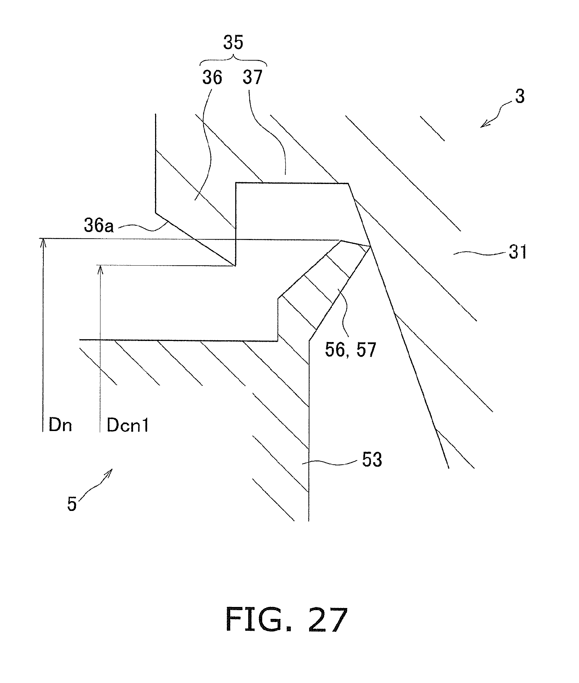

For example, a structure may be used in which the provisional-assembly protruding part 57, which is smaller in diameter than the provisional-assembly protruding part 36, is deformed so as to be larger in diameter than the provisional-assembly protruding part 36 by inserting the provisional-assembly protruding part 57 through the provisional-assembly enlarged-diameter part 37 via the provisional-assembly protruding part 36 and pressing the provisional-assembly protruding part 57 into the pressing surface 34, as shown in FIGS. 25 to 27. Aside from the provisional-assembly protruding part 57, the configuration is identical to that of Modification 3, and descriptions thereof are therefore omitted.

Similar to Modification 3, the front ferrule 4 and the back ferrule 5 can be provisionally assembled by the provisional-assembly engaging parts 44, 54 in the present modification as well, whereby axial displacement between the front ferrule 4 and the back ferrule 5 can be suppressed. The back ferrule 5 and the coupling member 3 can also be provisionally assembled by the provisional-assembly engaging parts 56, 35. The provisional assembly structure of the front ferrule 4 and the back ferrule 5 may also be a provisional assembly structure that uses screws and splines such as those of Modifications 1 and 2 (see FIGS. 12 to 17), instead of a structure in which the provisional-assembly protruding part 55 is press-fitted into the provisional-assembly protruding part 45 and inserted through the provisional-assembly enlarged-diameter part 46.

### <Modification 5>

In the flareless tube connection structure 1 of Modification 3, the provisional assembly structure of the back ferrule 5 and the coupling member 3 is a structure in which the provisional-assembly protruding part 57 is press-fitted into the provisional-assembly protruding part 36 and inserted through the provisional-assembly enlarged-diameter part 37, but is not limited as such.

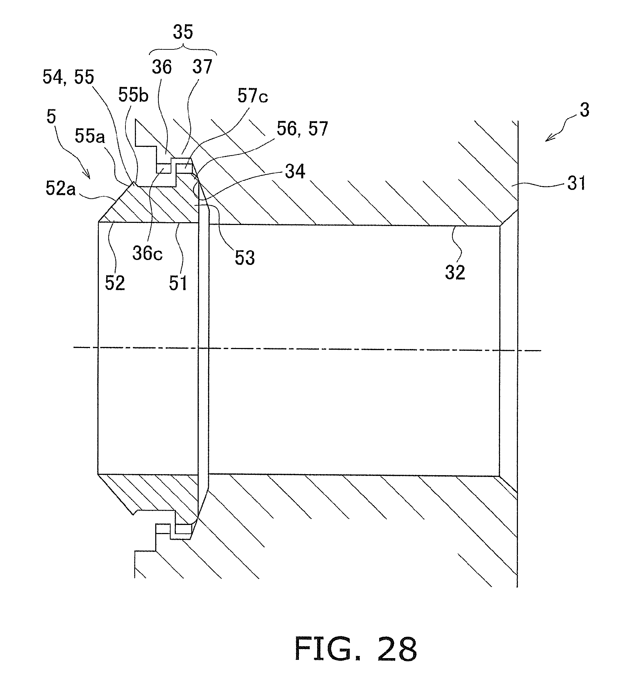

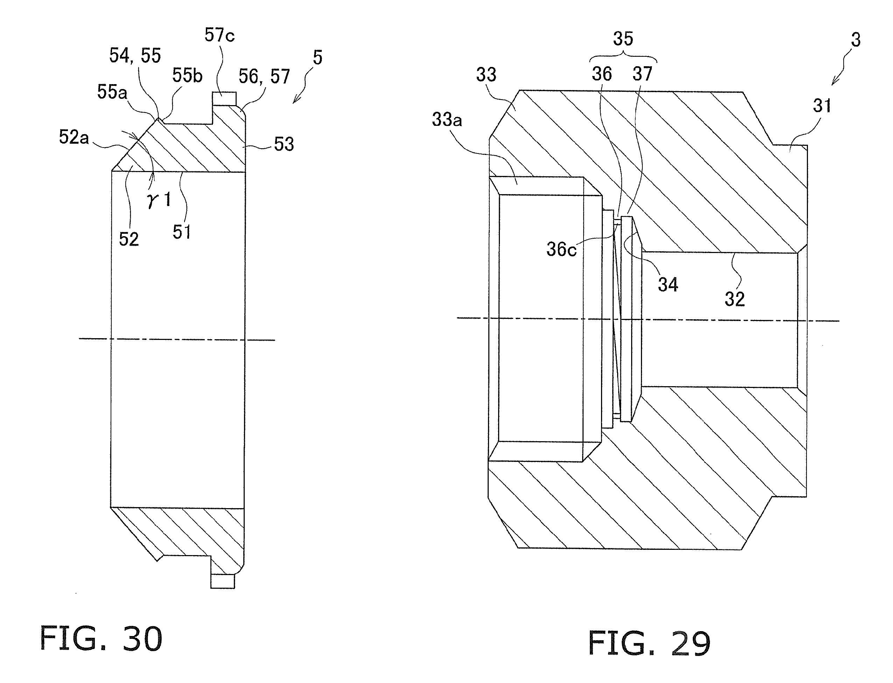

For example, a structure may be used in which a male screw 57c is formed on the provisional-assembly protruding part 57, a female screw 36c is formed on the provisional-assembly protruding part 36, and the provisional-assembly protruding part 57 is inserted through the provisional-assembly enlarged-diameter part 37 by threading the male screw 57c and the female screw 36c together, as shown in FIGS. 28 to 30. Aside from the provisional-assembly protruding part 57 and the provisional-assembly protruding part 36, the configuration is identical to that of Modification 3, and descriptions thereof are therefore omitted.

Similar to Modification 3, the front ferrule 4 and the back ferrule 5 can be provisionally assembled by the provisional-assembly engaging parts 44, 54 in the present modification as well, whereby axial displacement between the front ferrule 4 and the back ferrule 5 can be suppressed. The back ferrule 5 and the coupling member 3 can also be provisionally assembled by the provisional-assembly engaging parts 56, 35. The provisional assembly structure of the front ferrule 4 and the back ferrule 5 may also be a provisional assembly structure that uses screws and splines such as those of Modifications 1 and 2 (see FIGS. 12 to 17), instead of a structure in which the provisional-assembly protruding part 55 is press-fitted into the provisional-assembly protruding part 45 and inserted through the provisional-assembly enlarged-diameter part 46.

### <Modification 6>

In the flareless tube connection structure 1 of Modification 3, the provisional assembly structure of the back ferrule 5 and the coupling member 3 is a structure in which the provisional-assembly protruding part 57 is press-fitted into the provisional-assembly protruding part 36 and inserted through the provisional-assembly enlarged-diameter part 37, but is not limited as such.

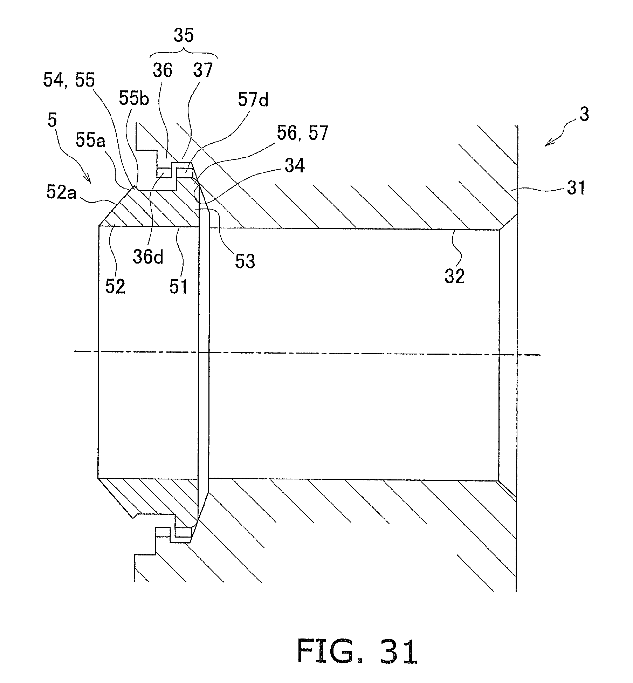

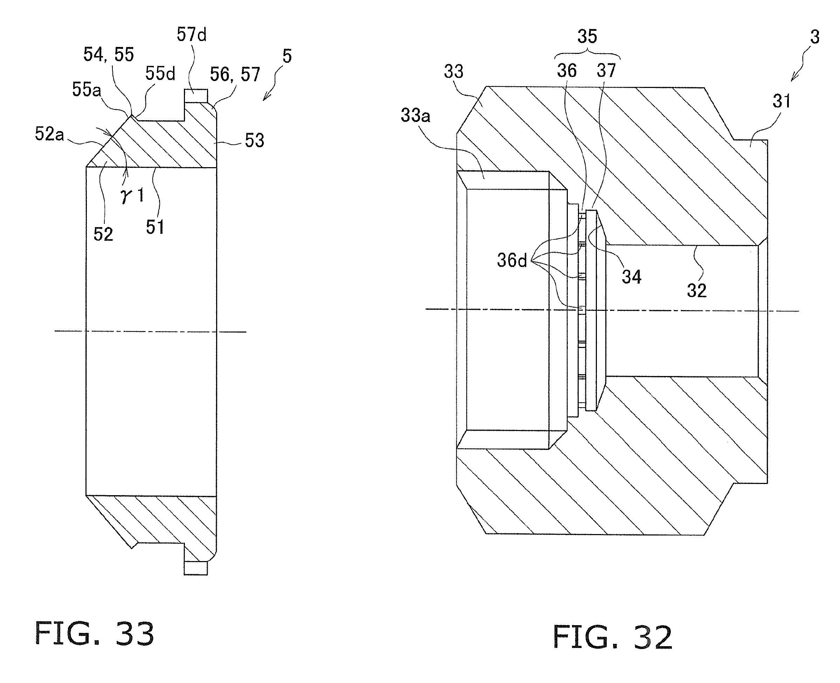

For example, a structure may be used in which spline teeth 57d, 36d are formed on the provisional-assembly protruding part 57 and the provisional-assembly protruding part 36, and the provisional-assembly protruding part 57 is inserted through the provisional-assembly enlarged-diameter part 37 by the spline engagement between the spline teeth 57d, 36d, as shown in FIGS. 31 to 33. Aside from the provisional-assembly protruding part 57 and the provisional-assembly protruding part 37, the configuration is identical to that of Modification 3, and descriptions thereof are therefore omitted.

Similar to Modification 3, the front ferrule 4 and the back ferrule 5 can be provisionally assembled by the provisional-assembly engaging parts 44, 54 in the present modification as well, whereby axial displacement between the front ferrule 4 and the back ferrule 5 can be suppressed. The back ferrule 5 and the coupling member 3 can also be provisionally assembled by the provisional-assembly engaging parts 56, 35. The provisional assembly structure of the front ferrule 4 and the back ferrule 5 may also be a provisional assembly structure that uses screws and splines such as those of Modifications 1 and 2 (see FIGS. 12 to 17), instead of a structure in which the provisional-assembly protruding part 55 is press-fitted into the provisional-assembly protruding part 45 and inserted through the provisional-assembly enlarged-diameter part 46.

### <Modification 7>

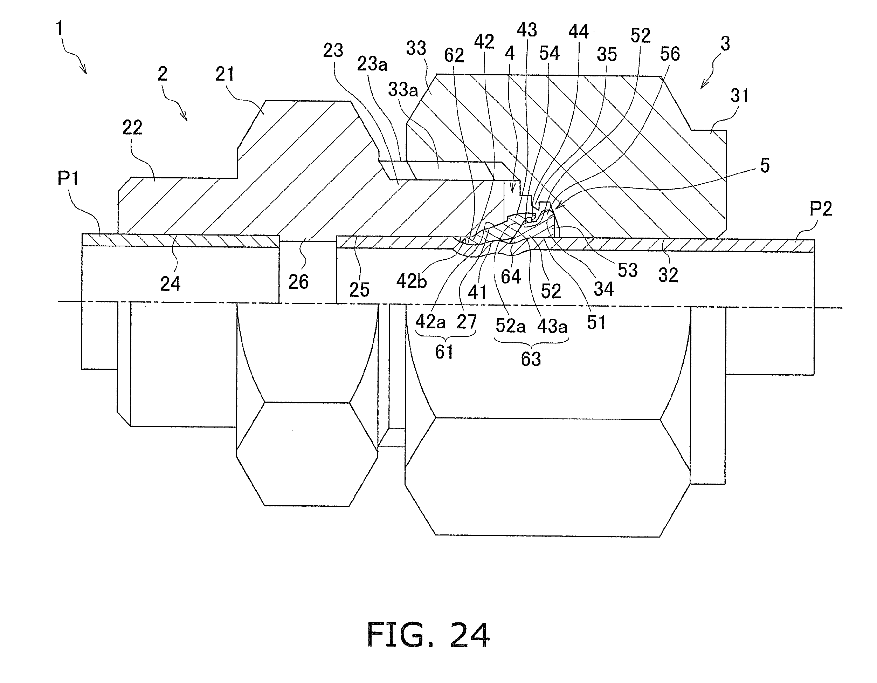

In the flareless tube connection structures 1 of the above embodiment and Modifications 1 to 6, fluid leakage is suppressed by four seal parts 61 to 64 (see FIGS. 11 and 24). Specifically, the seal between the joint body 2 and the front ferrule 4 is accomplished by the seal part 61 formed between the cam surface 27 of the joint body 2 and the tapered surface 42a of the front ferrule 4. The seal between the front ferrule 4 and the pipe P2 is accomplished by the seal part 62 formed between the front end of the front ferrule 4 and the pipe P2. The seal between the front ferrule 4 and the back ferrule 5 is accomplished by the seal part 63 formed between the tapered surface 43a of the front ferrule 4 and the tapered surface 52a of the back ferrule 5. The seal between the back ferrule 5 and the pipe P2 is accomplished by the seal part 64 formed between the front end of the back ferrule 5 and the pipe P2.

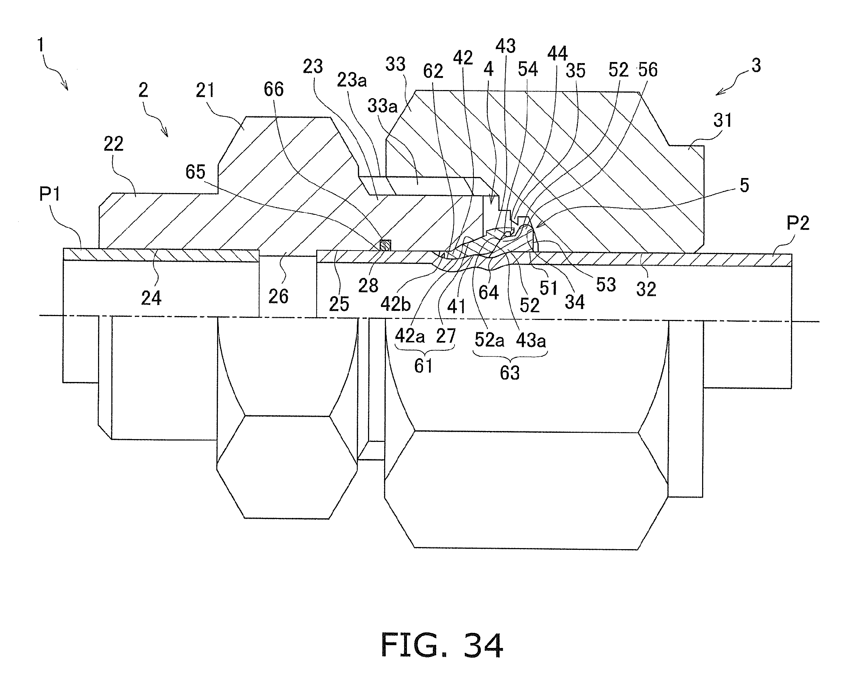

In a flareless tube connection structure 1 having four such seal parts 61 to 64, an O-ring seal part 65 for sealing the joint body 2 and the pipe P2 may be provided as shown in FIG. 34, in order to further improve reliability with respect to fluid leakage. An annular groove 28 is formed in a portion of the shaft part 23 of the joint body 2 farther forward than the cam surface 27, and an O-ring 66 is fitted into the groove 28. In FIG. 34, the O-ring seal part 65 is provided to the configuration of Modification 3, but the O-ring seal part 65 may also be provided in the above embodiment and the Modifications 1, 2, and 4 to 6 as well.

### <Modification 8>

In the flareless tube connection structures 1 of the above embodiment and Modifications 1 to 7, the profile of the coupling member 3 is in the shape of a substantially hexagonal nut, and the structure is such that even after the coupling member 3 has been fastened and mounted to the joint body 2, the coupling member 3 can be grasped and loosened by a universal fastening tool.

In such a flareless tube connection structure 1, the configuration may be designed so that after the coupling member 3 is fastened and mounted to the joint body 2, the coupling member 3 cannot be grasped by a universal fastening tool and the coupling member 3 cannot be loosened.

For example, the same provisional assembly structure may be used for the ferrules 4, 5 and the coupling member 3 as that of Modification 3, and the coupling member 3 may be designed so that after the coupling member is mounted to the joint body 2, the tool-engaging part grasped by the universal fastening tool is cut from the fastened part that is threaded with the joint body 2.

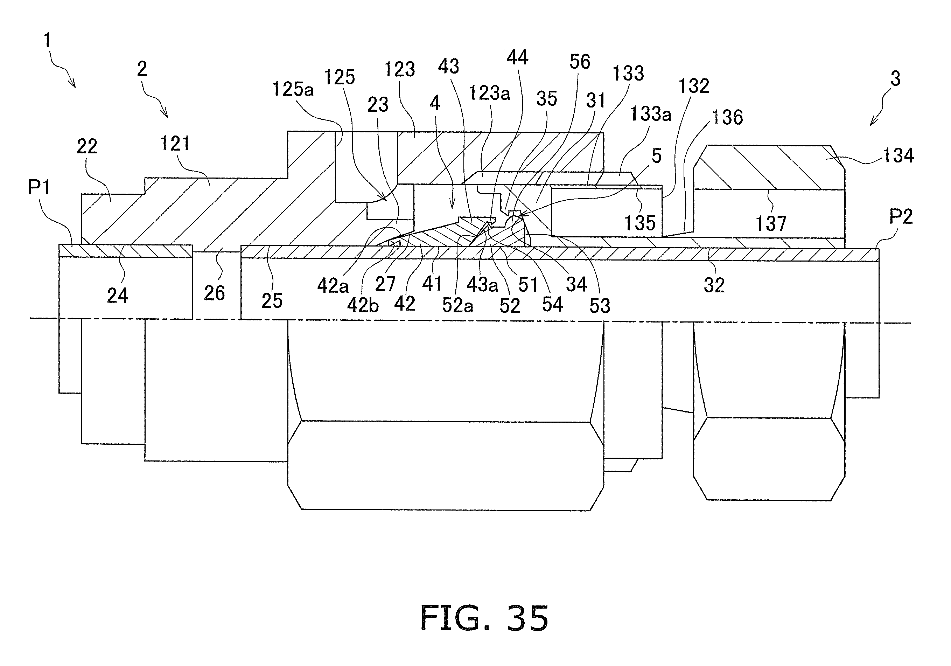

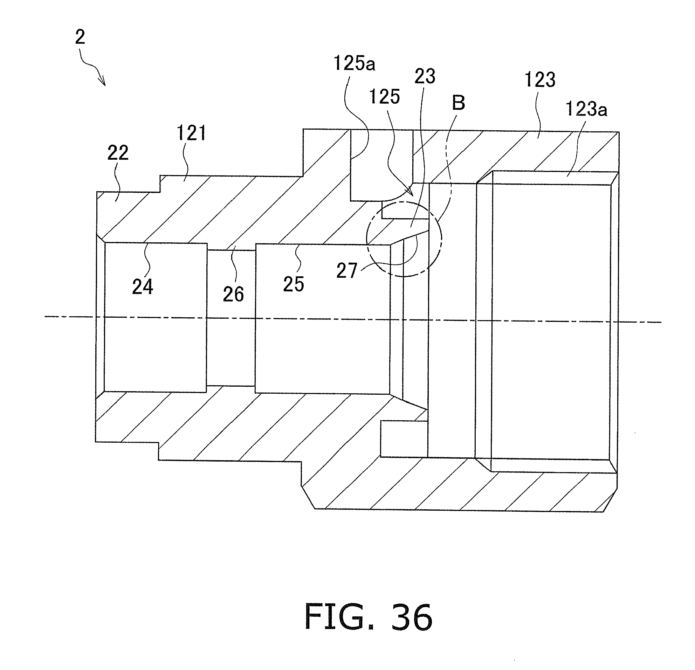

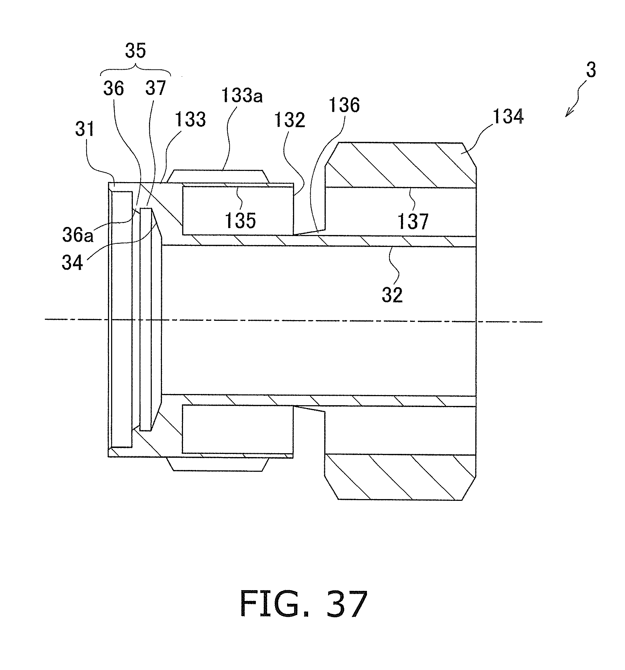

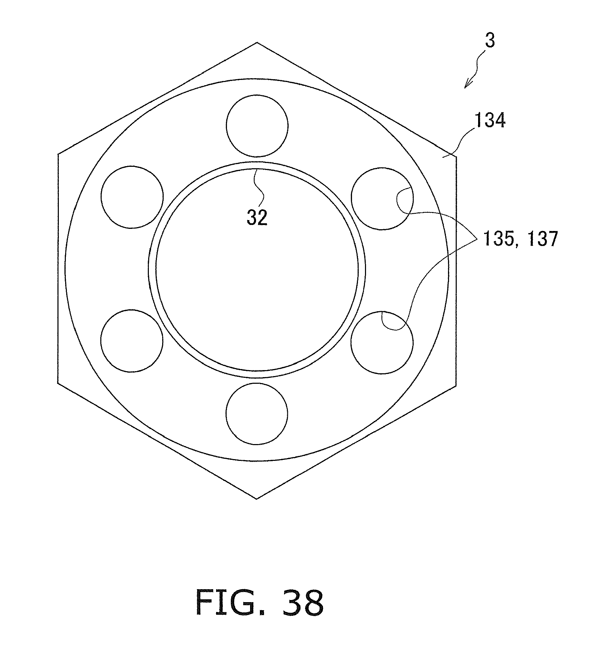

In the flareless tube connection structure 1 of the present modification, the configurations of the joint body 2 and the coupling member 3 differ from those of Modification 3, as shown in FIGS. 35 to 40. Therefore, the following description centers on the configurations of the joint body 2 and the coupling member 3, and configurations other than those of the joint body 2 and the coupling member 3 are not described.

The joint body 2 is a member made of a metal such as brass, having a base part 121. A socket part 22 is formed in the front side of the base part 121, and a cylinder part 123 and shaft part 23 are formed in the rear side of the base part 121. A screw part 123a composed of a female screw for threading the coupling member 3 is formed in the internal peripheral portion of the cylinder part 123. The shaft part 23 is formed so as to protrude into the internal peripheral space of the cylinder part 123. An annular space 125 for regulating the strength of the shaft part 23 when a pipe is connected is formed in the external peripheral surface of the shaft part 23. A ventilation hole 125a for preventing internal freezing is formed in the external periphery of the annular space 125. The external peripheral portions of the base part 121 and the cylinder part 123 are formed to have substantially hexagonal nut-shaped profiles so that they can be grasped by a universal fastening tool. An insertion hole 24 for inserting the pipe P1 is formed in the axial center portion from the socket part 22 up to the base part 121. An insertion hole 25 for inserting the pipe P2 is formed in the axial center portion from the shaft part 23 up to the base part 121. Between the insertion hole 24 and the insertion hole 25 in the axial direction is formed an uneven section 26 which forms a communication hole smaller in diameter than the insertion hole 24 and the insertion hole 25, and which regulates the axial movement of the pipes P1, P2. A cam surface 27 is formed in the distal end portion of the shaft part 23, i.e. the rear end portion of the insertion hole 25 (see FIG. 5).

The coupling member 3 is a member made of a metal such as brass, and an insertion hole 32 for inserting the pipe P2 is formed in the axial center portion, while a discoid slit 132 having a seam in the diametric direction is formed so as to halve the coupling member 3 to the front and rear. A fastening part 133 threaded with the joint body 2 is formed in the front side of the discoid slit 132, and a tool-engaging part 134 grasped by the universal fastening tool is formed in the rear side of the discoid slit 132. A screw part 133a composed of a male screw to be threaded with the screw part 123a of the joint body 2 is formed in the external peripheral portion of the fastening part 133. The external peripheral portion of the tool-engaging part 134 is formed to have a substantially hexagonal nut-shaped profile so that it can be grasped by a universal fastening tool. A cut part 136 composed of a thin annular portion for linking the fastening part 133 and the tool-engaging part 134 is formed between the discoid slit 132 and the insertion hole 32 in the diametric direction. The cut part 136 is designed to have a strength such that it is cut when the fastening torque of the tool-engaging part 134 increases to a pipe-connection completion value. The cut part 136 is formed so as to decrease in thickness toward the front, and is cut near the fastening part 133. The front portion of the fastening part 133 constitutes the base part 31, where the same pressing surface 34 and provisional-assembly engaging part 35 (coupling member-side provisional-assembly engaging part) as in Modification 3 are formed (see FIGS. 20 and 21). Formed in the rear portion of the fastening part 133 are a plurality (six in this case) of engaging holes 135 of a predetermined depth and circular in cross section, in which a specialized tool 107 can engage. Machining holes 137 for enabling the engaging holes 135 to be machined from the tool-engaging part 134 side are formed in the tool-engaging part 134 so as to face the engaging holes 135.

The following is a description of a tube connection method using the flareless tube connection structure 1 of the present modification configured as described above.

Prior to connecting the pipe P2, the joint body 2 is attached to the pipe P1 led out from the connected-side device. Next, to connect the pipe P2 by means of the flareless tube connection structure 1, first the pipe P2 to be connected is inserted into the insertion hole 32 of the coupling member 3, and the coupling member 3 is fitted over the pipe P2. Next, the pipe P2 is inserted into the pipe through-holes 31, 41, 51 of the front ferrule 4, the back ferrule 5, and the coupling member 3 which have been provisionally assembled together in advance, and the front ferrule 4, the back ferrule 5, and the coupling member 3 are fitted over the pipe P2. Provisionally assembling the front ferrule 4, the back ferrule 5, and the coupling member 3 is not limited to being done in advance before the pipe P2 is inserted into the front ferrule 4, the back ferrule 5, and the coupling member 3. For example, when the pipe P2 is inserted into the front ferrule 4, the back ferrule 5, and the coupling member 3 when they have not been provisionally assembled together, the ferrules 4, 5 and the coupling member 3 may be provisionally assembled by clamping the back ferrule 5 between the front ferrule 4 and the coupling member 3 in the axial direction. The front end portion of the pipe P2 is then inserted into the insertion hole 25 of the joint body 2 and the pipe P2 is brought in contact with the uneven section 26, in which state the coupling member 3 is threaded onto the joint body 2 with the front ferrule 4 and the back ferrule 5 provisionally assembled.

In this state, when the tool-engaging part 134 of the coupling member 3 is fastened to the joint body 2 by hand, the rearward part 53 of the back ferrule 5 is pressed forward by the pressing surface 34 of the coupling member 3, similar to Modification 3. The rearward part 43 of the front ferrule 4, which is provisionally assembled with the back ferrule 5, is also pressed forward by the forward part 52 of the back ferrule 5. The tapered surface 42a of the forward part 42 of the front ferrule 4 thereby comes in contact with the rear portion of the cam surface 27 of the joint body 2. At this time, the portion of the forward part 42 of the front ferrule 4 that is in front of the notch 42b is bent diametrically inward and provisionally snared on the front portion of the cam surface 27 (the portion having the incline angle α2). The tapered surface 52a of the forward part 52 of the back ferrule 5 also comes in contact with the tapered surface 43a of the rearward part 43 of the front ferrule 4.

In this state, a universal fastening tool is used to fasten the tool-engaging part 134 of the coupling member 3 to the joint body 2. The tapered surface 42a is then first pressed into the cam surface 27, and the front portion of the forward part 42 is wedged into the pipe P2, similar to Modification 3. This results in the formation of a seal part 61 between the cam surface 27 of the joint body 2 and the tapered surface 42a of the front ferrule 4, and a seal part 62 between the front end of the front ferrule 4 and the pipe P2.

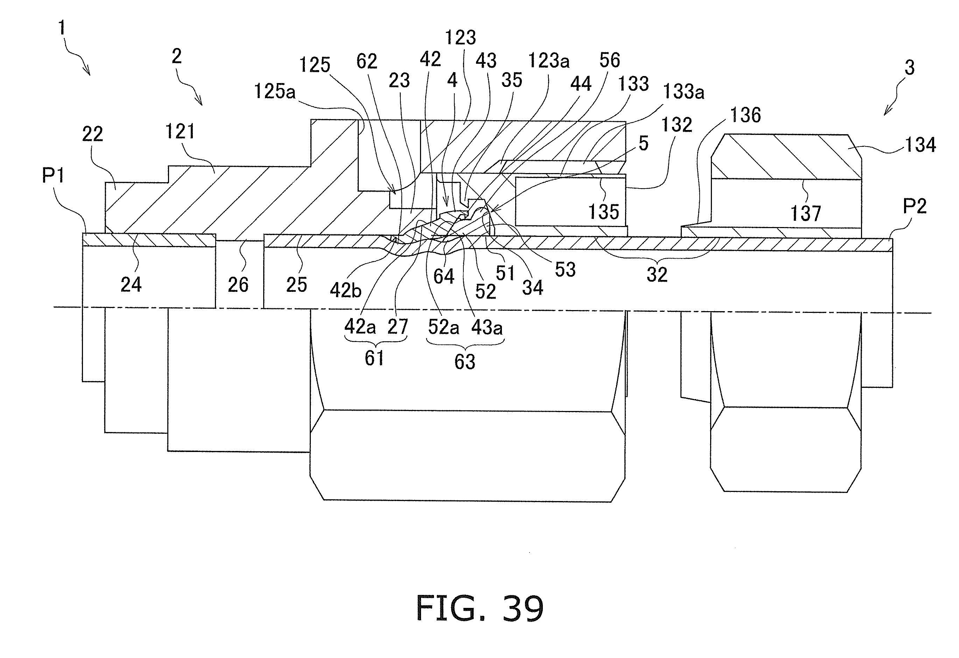

When the front ferrule 4 is wedged further into the pipe P2, a seal part 63 is then formed between the tapered surface 43a of the front ferrule 4 and the tapered surface 52a of the back ferrule 5, and a seal part 64 is formed between the front end of the back ferrule 5 and the pipe P2, similar to Modification 3. Specifically, the tapered surface 52a is pressed into the tapered surface 43a, and the front portion of the forward part 52 is wedged into the pipe P2. The wedging of the front portion of the forward part 52 into the pipe P2 is then complete, and when the fastening torque of the tool-engaging part 134 increases to the pipe-connection completion value, the cut part 136 is cut and the tool-engaging part 134 is cut from the fastening part 133 (see FIG. 39).

In this manner is a pipe connection established using the flareless tube connection structure 1 of the present modification.

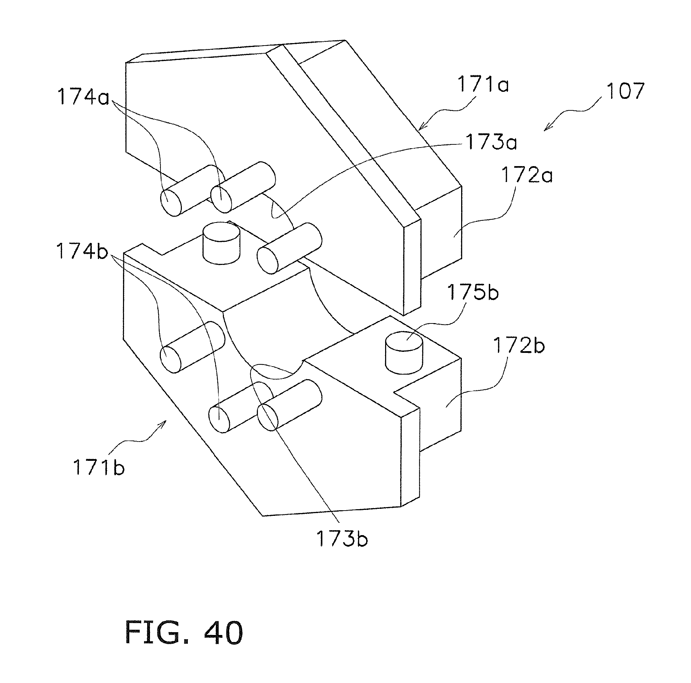

Next, the fastening part 133 fastened in the state described above cannot be loosened in a simple manner by anybody because the tool-engaging part 134 is cut, but the fastening part 133 can be loosened by using a specialized tool 107 such as the one shown in FIG. 40.

The specialized tool 107 has primarily two base parts 171 a, 171b, which are shaped as a hexagonal disc divided in two. The base parts 171a, 171b have nut parts 172a, 172b that form a hexagonal nut due to the base parts being coupled together. Two columnar engaging protrusions 175b that engage with engaging holes (not shown) in the base part 171a are formed in the surface of the base part 171b that faces the base part 171a. Semicircular holes 173a, 173b are also formed in the middles of the base parts 171a, 171b. The inside diameters of the holes 173a, 173b are formed slightly larger than the outside diameter of the pipe P2. Three columnar engaging protrusions 174a, 174b capable of engaging with the engaging holes 135 of the fastening part 133 are formed in the side surfaces of both base parts 171a, 171b.

The base parts 171a, 171b of the specialized tool 107 are coupled by the engaging holes and the engaging protrusions 175b, and the engaging protrusions 174a, 174b are engaged in the engaging holes 135 of the fastening part 133. The threading between the fastening part 133 and the joint body 2 can be loosened and the pipe P2 can be removed by using a universal fastening tool on the nut parts 172a, 172b of the specialized tool 107 to rotate the specialized tool 107. With this pipe disconnecting method, the pipe P2 can be removed without cutting the pipe P2.

Similar to Modification 3, the front ferrule 4 and the back ferrule 5 can be provisionally assembled by the provisional-assembly engaging parts 44, 54 in the present modification as well, whereby axial displacement between the front ferrule 4 and the back ferrule 5 can be suppressed. The back ferrule 5 and the coupling member 3 can also be provisionally assembled by the provisional-assembly engaging parts 56, 35. Moreover, it is possible to ensure that the coupling member 3 cannot be loosened by a universal fastening tool after the coupling member 3 has been fastened and mounted to the joint body 2. The example described here assumes the configuration is that of Modification 3 and uses a configuration in which the coupling member 3 cannot be loosened after being mounted, but the present invention is not limited to this example. For example, a configuration may be used in which the coupling member 3 cannot be loosened after being mounted in the above embodiment and Modifications 1, 2, and 4 to 7.

### <Modification 9>

In the flareless tube connection structure 1 of Modification 8, the cut part 136 is cut when the fastening torque of the tool-engaging part 134 increases to a pipe-connection completion value.

However, in the flareless tube connection structure, because the change in fastening torque relative to rotational angle is gradual, there is a risk of considerable fluctuation in cutting torque depending on factors such as the strength of the material used and the dimension tolerance of the components.

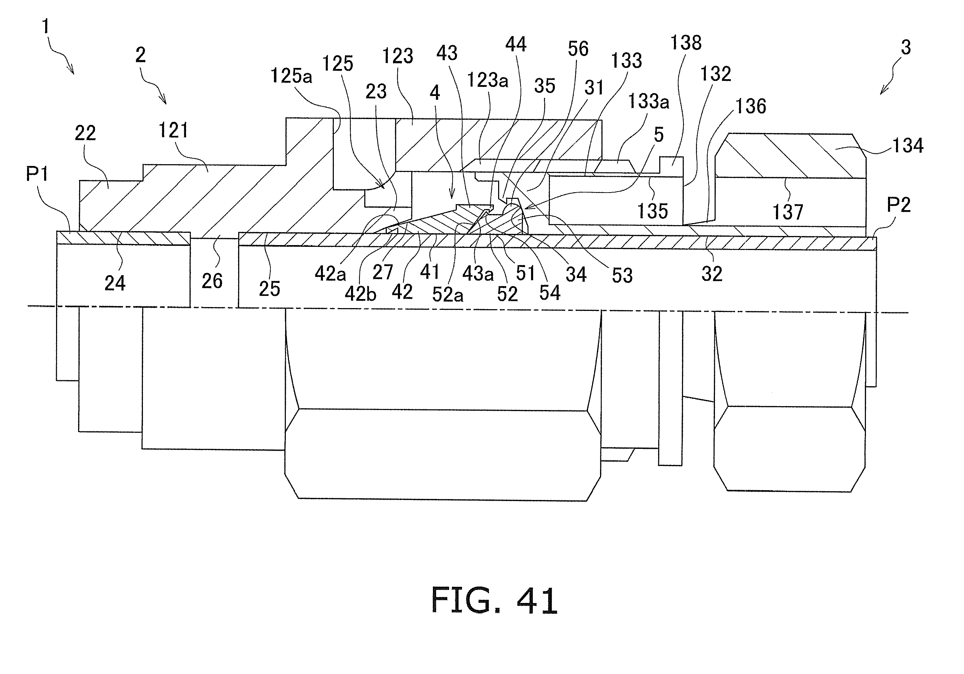

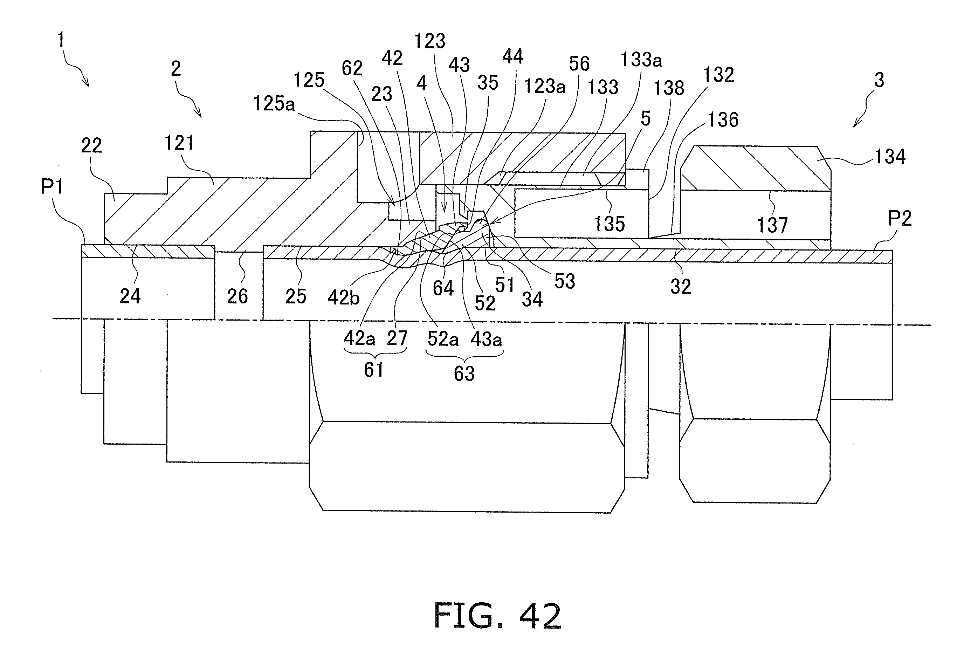

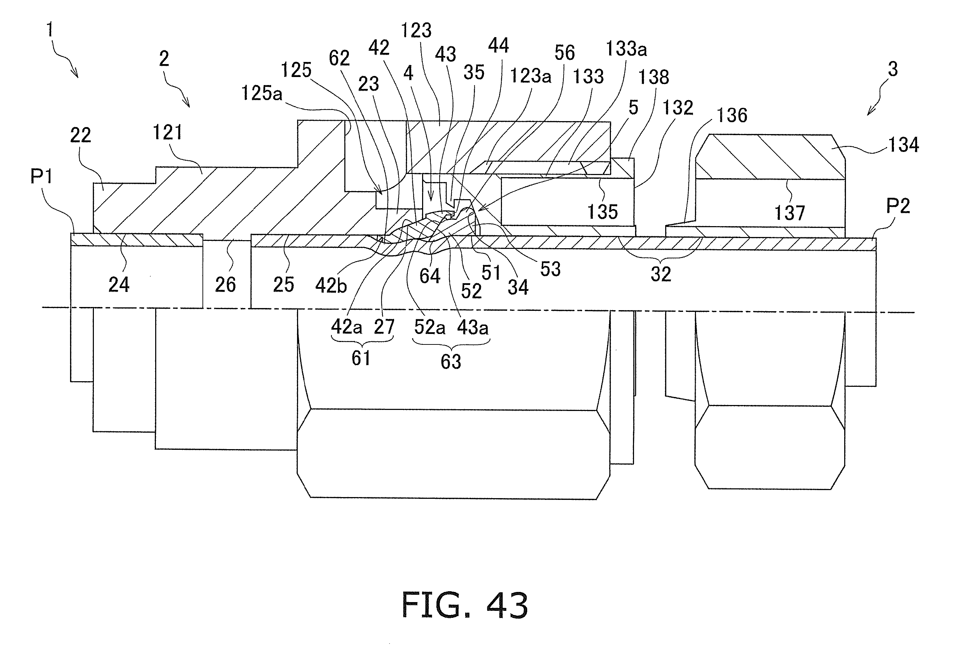

In view of this, a protuberance 138 that protrudes in the diametric direction is provided in the rear side of the screw part 133a of the fastening part 133, as shown in FIGS. 41 to 43. This protuberance 138 is formed so as to come in contact with the end surface of the rear side of the cylinder part 123 of the joint body 2, immediately before the coupling member 3 begins to be threaded on the joint body 2 and the tool-engaging part 134 is cut from the fastening part 133. Therefore, after the rear end surface of the cylinder part 123 of the joint body 2 has come in contact with the protuberance 138, fastening torque equal to or greater than the cutting torque acts on the tool-engaging part 134, causing the tool-engaging part 134 to be cut from the fastening part 133.

It is thereby possible to cope with fluctuation in cutting torque as described above in the present modification. The example described here is of the configuration of Modification 8 premised on the configuration of Modification 3, wherein the protuberance 138 is provided, but the present invention is not limited to this example. The protuberance 138 may also be provided in the configuration of Modification 8 premised on the configuration of the above embodiment and any of Modifications 1, 2, and 4 to 7, for example.

### <Other Embodiments>

Embodiments of the present invention were described above based on the drawings, but the specific configuration is not limited to the above embodiment or the modifications thereof and can be varied within a range that does not deviate from the scope of the invention.

In the above embodiment and the modifications thereof, the pipe P1 is brazed or otherwise attached to the joint body 2, but the present invention is not limited as such. For example, a double-union structure may be used in which the pipe P1 side of the joint body 2 is provided with the same flareless tube connection structure 1 as the pipe P2 side.

In Modifications 8 to 10, the cut part 136 is formed by a discoid slit 132 having a seam in the diametric direction so as to halve the coupling member 3 front to back, but the present invention is not limited as such. For example, the cut part 136 may be formed by a cylindrical slit having a seam in the axial direction so as to halve the coupling member 3 inside to outside.

In the above embodiment and the modifications thereof, a metal material such as copper is used for the pipes and a metal material such as brass is used for the joint body, the coupling member, and the ferrules, but the present invention is not limited as such. For example, aluminum, stainless steel, resins, iron, and the like may be used for the pipes, the joint body, the coupling member, and the ferrules.

### INDUSTRIAL APPLICABILITY

The present invention can be widely applied to flareless tube connection structures that use two ferrules.

### REFERENCE SIGNS LIST

- 1: Flareless tube connection structure
- 2: Joint body
- 3: Coupling member
- 4: Front ferrule
- 5: Back ferrule
- 35: Provisional-assembly engaging part (coupling member-side provisional-assembly engaging part)
- 36: Provisional-assembly protruding part (coupling member-side provisional-assembly protruding part)
- 37: Provisional-assembly enlarged-diameter part (coupling member-side provisional-assembly enlarged-diameter part)
- 44: Provisional-assembly engaging part (front ferrule-side provisional-assembly engaging part)
- 45: Provisional-assembly protruding part (front ferrule-side provisional-assembly protruding part)
- 46: Provisional-assembly enlarged-diameter part (front ferrule-side provisional-assembly enlarged-diameter part)
- 51: Pipe through-hole
- 54: Provisional-assembly engaging part (first back ferrule-side provisional-assembly engaging part)
- 55: Provisional-assembly protruding part (first back ferrule-side provisional-assembly protruding part)
- 56: Provisional-assembly engaging part (second back ferrule-side provisional-assembly engaging part)
- 57: Provisional-assembly protruding part (second back ferrule-side provisional-assembly protruding part)
- P2: Pipe

### CITATION LIST

### PATENT LITERATURE

[Patent Literature 1]
   Utility Model Application Laid-open Publication No. 49-3 111
[Patent Literature 2]
   U.S. Patent Application Laid-open Publication No. 2004/0113429, Specification
[Patent Literature 3]
   Japanese Laid-open Patent Application No. 2003-232474
[Patent Literature 4]
   U.S. Patent No. 4304422, Specification
[Patent Literature 5]
   U.S. Patent No. 4944534, Specification
[Patent Literature 6]
   Japanese Laid-open Patent Application No. 2007-235989

## Claims

1. A flareless tube connection structure (1) comprising a joint body (2), a coupling member (3) mounted to the joint body by being threaded thereto, and a front ferrule (4) and back ferrule (5) formed separately from the joint body and the coupling member and clamped between the joint body and the coupling member; wherein
the front ferrule and the back ferrule are formed separately from each other and can be provisionally assembled together before the coupling member is mounted to the joint body.

2. The flareless tube connection structure (1) according to claim 1, wherein
a first back ferrule-side provisional-assembly engaging part (54) is formed on the back ferrule (5);
a front ferrule-side provisional-assembly engaging part (44) capable of engaging with the first back ferrule-side provisional-assembly engaging part is formed on the front ferrule (4); and
the front ferrule and the back ferrule are provisionally assembled so that mutual axial and diametric movement is restricted by the engaging between the first back ferrule-side provisional-assembly engaging part and the front ferrule-side provisional-assembly engaging part.

3. The flareless tube connection structure (1) according to claim 2, wherein
a pipe through-hole (51) into which a pipe (P2) is inserted is formed in the back ferrule (5);
before the front ferrule (4) and the back ferrule are provisionally assembled, the maximum angle at which the back ferrule can be inclined relative to the axial center of the pipe, due to a gap between the hole diameter of the pipe through-hole and the outside diameter of the pipe, is denoted as the pre-provisional-assembly inclinable angle θ0, and after the front ferrule and the back ferrule have been provisionally assembled, the maximum angle at which the back ferrule can be inclined relative to the axial center of the pipe, due to the engaging between the first back ferrule-side provisional-assembly engaging part (54) and the front ferrule-side provisional-assembly engaging part (44), is denoted as the post-provisional-assembly inclinable angle θ1; and
the front ferrule and the back ferrule are configured so as to fulfill the relationship θ1 < θ0.

4. The flareless tube connection structure (1) according to claim 2 or 3, wherein
a pipe through-hole (51) into which a pipe (P2) is inserted is formed in the back ferrule (5);
the axial length of the back ferrule is denoted as Lb, the gap between the hole diameter of the pipe through-hole and the outside diameter of the pipe is denoted as Sb, and after the front ferrule (4) and the back ferrule have been provisionally assembled, the displacement whereby the back ferrule can move in the axial direction relative to the front ferrule, due to the engaging between the first back ferrule-side provisional-assembly engaging part (54) and the front ferrule-side provisional-assembly engaging part (44), is denoted as L1, and the maximum outside diameter of the first back ferrule-side provisional-assembly engaging part is denoted as Dm; and
the front ferrule and the back ferrule are configured so as to fulfill the relationship L1 < Sb × Dm / Lb.

5. The flareless tube connection structure (1) according to any of claims 2 through 4, wherein
the first back ferrule-side provisional-assembly engaging part (54) is a first back ferrule-side provisional-assembly protruding part (55) that protrudes diametrically outward;
the front ferrule-side provisional-assembly engaging part (44) has a front ferrule-side provisional-assembly protruding part (45) protruding diametrically inward, and a front ferrule-side provisional-assembly enlarged-diameter part (46) having a larger inside diameter than the front ferrule-side provisional-assembly protruding part;
the outside diameter of the first back ferrule-side provisional-assembly protruding part is formed so as to be larger than the inside diameter of the front ferrule-side provisional-assembly protruding part and smaller than the inside diameter of the front ferrule-side provisional-assembly enlarged-diameter part; and
the first back ferrule-side provisional-assembly protruding part is inserted through and held in the front ferrule-side provisional-assembly enlarged-diameter part via the front ferrule-side provisional-assembly protruding part.

6. The flareless tube connection structure (1) according to claim 5, wherein
the first back ferrule-side provisional-assembly protruding part (55) is press-fitted into the front ferrule-side provisional-assembly protruding part (45) and inserted through the front ferrule-side provisional-assembly enlarged-diameter part (46).

7. The flareless tube connection structure (1) according to any of claims 1 through 6, wherein
the coupling member (3) and the back ferrule (5) are capable of being provisionally assembled together before the coupling member is mounted to the joint body (2).

8. The flareless tube connection structure (1) according to claim 7, wherein
a second back ferrule-side provisional-assembly engaging part (56) is formed in the back ferrule (5);
a coupling member-side provisional-assembly engaging part (35) capable of engaging with the second back ferrule-side provisional-assembly engaging part is formed in the coupling member (3); and
the coupling member and the back ferrule are provisionally assembled so that mutual axial and diametric movement are restricted, due to the engaging between the second back ferrule-side provisional-assembly engaging part and the coupling member-side provisional-assembly engaging part.

9. The flareless tube connection structure (1) according to claim 8, wherein
the second back ferrule-side provisional-assembly engaging part (56) is a second back ferrule-side provisional-assembly protruding part (57) that protrudes diametrically outward;
the coupling member-side provisional-assembly engaging part (35) has a coupling member-side provisional-assembly protruding part (36) that protrudes diametrically inward and a coupling member-side provisional-assembly enlarged-diameter part (37) having a larger inside diameter than the coupling member-side provisional-assembly protruding part;
the outside diameter of the second back ferrule-side provisional-assembly protruding part is formed so as to be larger than the inside diameter of the coupling member-side provisional-assembly protruding part and smaller than the inside diameter of the coupling member-side provisional-assembly enlarged-diameter part; and
the second back ferrule-side provisional-assembly protruding part is inserted through and held in the coupling member-side provisional-assembly enlarged-diameter part via the coupling member-side provisional-assembly protruding part.

10. The flareless tube connection structure (1) according to claim 9, wherein
the second back ferrule-side provisional-assembly protruding part (57) is press-fitted into the coupling member-side provisional-assembly protruding part (36) and inserted through the coupling member-side provisional-assembly enlarged-diameter part (37).

11. The flareless tube connection structure (1) according to claim 10, wherein
the cross-sectional shape of the second back ferrule-side provisional-assembly protruding part (57) along the axial direction is an arcuate shape.

12. The flareless tube connection structure (1) according to claim 10 or 11, wherein
the difference between the outside diameter of the first back ferrule-side provisional-assembly protruding part (55) and the inside diameter of the front ferrule-side provisional-assembly protruding part (45) is denoted as the ferrule-ferrule press-fitting margin Sff, the difference between the outside diameter of the second back ferrule-side provisional-assembly protruding part (57) and the inside diameter of the coupling member-side provisional-assembly protruding part (36) is denoted as the ferrule-coupling member press-fitting margin Sfc; and
the front ferrule (4), the back ferrule (5), and the coupling member (3) are configured so as to fulfill the relationship Sff < Sfc.

13. The flareless tube connection structure (1) according to any of claims 10 through 12, wherein
the strength of the front ferrule-side provisional-assembly protruding part (45) is denoted as the front ferrule-side provisional-assembly protruding part strength Ff, and the strength of the coupling member-side provisional-assembly protruding part (36) is denoted as the coupling member-side provisional-assembly protruding part strength Fc; and
the front ferrule (4) and the coupling member (3) are configured so as to fulfill the relationship Ff < Fc.
